(19) Europäisches Patentamt
European Patent Office
Office européen des brevets

(11) **EP 3 996 381 A1**

(12) **EUROPEAN PATENT APPLICATION**
published in accordance with Art. 153(4) EPC

(43) Date of publication:
**11.05.2022 Bulletin 2022/19**

(51) International Patent Classification (IPC):
**H04N 21/44** (2011.01)    **H04N 21/466** (2011.01)
**H04N 21/475** (2011.01)    **H04N 21/485** (2011.01)

(21) Application number: **20855209.1**

(86) International application number:
**PCT/CN2020/108345**

(22) Date of filing: **11.08.2020**

(87) International publication number:
**WO 2021/031920 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.08.2019 CN 201910758415**

(71) Applicant: **Huawei Technologies Co., Ltd.
Longgang District
Shenzhen,
Guangdong 518129 (CN)**

(72) Inventors:
• **SHU, Lei
Shenzhen, Guangdong 518129 (CN)**
• **ZHONG, Weicai
Shenzhen, Guangdong 518129 (CN)**
• **LI, Honghao
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COVER IMAGE DETERMINATION METHOD AND APPARATUS, AND DEVICE**

(57)    Embodiments of this application provide a cover image determining method and apparatus, and a device. The method may include: extracting a plurality of key frames from a video; determining at least one first image in the plurality of key frames, where a correlation between a principal object included in the first image and the video is greater than or equal to a preset threshold; obtaining an object type of a principal object in each first image, where the object type is one of the following: a character type, an item type, a landscape type, or a scene type; and determining a cover image of the video based on the at least one first image and the object type of the principal object in each first image. In this way, quality of the determined cover image is improved.

| S1101 |
| --- |
| Extract at least one key frame from a video |

| S1102 |
| --- |
| Determine at least one first image in the at least one key frame, where a correlation between a principal object included in the first image and the video is greater than or equal to a preset threshold |

| S1103 |
| --- |
| Obtain an object type of a principal object in each first image, where the object type is one of the following: a character type, an item type, a landscape type, or a scene type |

| S1104 |
| --- |
| Determine a cover image of the video based on the at least one first image and the object type of the principal object in each first image |

FIG. 11

EP 3 996 381 A1

**Description**

This application claims priority to Chinese Patent Application No. 201910758415.8, filed with the Chinese Patent Office on August 16, 2019 and entitled "COVER IMAGE DETERMINING METHOD AND APPARATUS, AND DEVICE", which is incorporated herein by reference in its entirety.

**TECHNICAL FIELD**

This application relates to the field of computer technologies, and in particular, to a cover image determining method and apparatus, and a device.

**BACKGROUND**

Currently, most terminal devices (a mobile phone, a computer, a television, and the like) have a video play function. The terminal device may display a cover image of a video that can be played, so that a user can select a video based on a cover image of the video for viewing.

In an actual application process, the terminal device may determine the cover image of the video, or a video producer may determine the cover image of the video. In the conventional technology, a first frame of image of a video is usually determined as a cover image of the video, or a frame of image is randomly selected from a video as a cover image of the video. However, a cover image, of a video, determined by using the foregoing method is usually not in high quality. Consequently, the cover image of the video cannot accurately describe the video.

**SUMMARY**

This application provides a cover image determining method and apparatus, and a device, to improve quality of a determined cover image.

According to a first aspect, an embodiment of this application provides a cover image determining method. The method may include: extracting a plurality of key frames from a video; determining at least one first image in the plurality of key frames; obtaining an object type of a principal object in each first image; and determining a cover image of the video based on the at least one first image and the object type of the principal object in each first image, where a correlation between a principal object included in the first image and the video is greater than or equal to a preset threshold, and the object type is one of the following: a character type, an item type, a landscape type, or a scene type.

In the foregoing process, the plurality of key frames are first extracted from the video; the at least one first image is determined in the plurality of key frames; and the cover image of the video is determined based on the at least one first image and the object type of the principal object in each first image. The correlation between the principal object included in the first image and the video is greater than or equal to the preset threshold, and the cover image is determined based on the first image, and therefore there is a relatively high correlation between the cover image and the video. In this way, the cover image can more accurately describe the video, and quality of the determined cover image is improved.

In a possible implementation, the at least one first image may be determined in the plurality of key frames in the following manner: At least one second image is determined in the plurality of key frames based on a principal object included in each key frame; a correlation between a principal object in each second image and the video is determined; and an image, in the at least one second image, that includes a principal object whose correlation with the video is greater than or equal to the preset threshold is determined as the at least one first image. Each second image includes one principal object, and the second image is some or all images in the key frame.

In the foregoing process, according to the method, each first image may include the principal object, and the correlation between the principal object included in the first image and the video may be greater than or equal to the preset threshold.

In a possible implementation, the correlation between the principal object in the second image and the video may be determined in the following manner: Semantic analysis is performed on the video, to obtain semantic information of the video; object recognition processing is performed on the second image, to obtain an object name of the principal object in the second image; and the correlation between the principal object in the second image and the video is determined based on a degree of matching between the semantic information and the object name.

In the foregoing process, the semantic information of the video may accurately describe content (plot) of the video. Therefore, the correlation between the principal object in the second image and the video may be determined based on the degree of matching between the object name and the semantic information.

In a possible implementation, the correlation between the principal object in the second image and the video may be determined in the following manner: Object information of the principal object in the second image is obtained, where the object information includes at least one of the following information: a quantity of occurrences of the principal object in the video and a picture percentage of the principal object in a video frame that includes the principal object; and the correlation between the principal object in the second image and the video is determined based on the object information of the principal object in the second image.

In the foregoing process, the quantity of occurrences of the principal object in the video may reflect whether the principal object is a main object in the video, and a larger quantity of occurrences of the principal object in the video indicates a higher correlation between the principal object and the video. The picture percentage of the principal object in the video frame that includes the principal object may reflect whether there is a close-up of the principal object in the video. A larger picture percentage of the principal object in the video frame indicates a finer close-up of the principal object in the video and a higher correlation between the principal object and the video. Therefore, the correlation between the principal object and the video may be accurately determined based on one or more of the quantity of occurrences of the principal object in the video and the picture percentage of the principal object in the video frame that includes the principal object.

In a possible implementation, the cover image of the video may be determined based on the at least one first image and the object type of the principal object in each first image in the following manner: At least one piece of cover template information is obtained; at least one group of target images corresponding to each piece of cover template information is determined in the at least one first image based on each piece of cover template information and the object type of the principal object in each first image; and the cover image of the video is determined based on each piece of cover template information and the at least one group of corresponding target images. One cover image includes a group of target images. The cover template information is used to indicate a quantity of images included in a cover image, an object type of a principal object in the image, and an image layout manner.

In the foregoing process, the cover template information indicates the quantity of images included in the cover image, the object type of the principal object in the image, and the image layout manner. The cover template information is preset by a user, and reflects an effect, of the cover image, expected by the user. Therefore, based on the cover module information, the cover image of the video can be quickly determined, and the determined cover image matches the effect expected by the user.

In a possible implementation, the cover template information includes at least one image identifier, an object type corresponding to each image identifier, and layout information corresponding to each image identifier. The layout information includes a shape, a size, and a position of an image corresponding to the image identifier.

In the foregoing process, the cover template information exists in a form of text (code). When the cover template information needs to be modified, only the text (code) needs to be modified. Therefore, an operation is simple and convenient, and it is easy to maintain the cover template information.

In a possible implementation, the cover template information includes a cover template image and an object type corresponding to each image supplementation region in the cover template image, the cover template image includes at least one image supplementation region, and an object type corresponding to the image supplementation region is an object type of a principal object in an image to be supplemented to the image supplementation region.

In the foregoing process, the cover template information exists in a form of a combination of an image and text. When a cover image needs to be generated, only a corresponding image needs to be supplemented to the supplementation region in the cover template image. Therefore, an operation is easy and convenient, and relatively high efficiency is achieved in generating the cover image based on the cover template information.

In a possible implementation, determining at least one group of target images corresponding to any one of the at least one piece of cover template information in the at least one first image based on the cover template information and the object type of the principal object in each first image includes: determining at least one target object type and a quantity of images corresponding to each target object type based on the cover template information; and determining the at least one group of target images corresponding to the cover template information in the at least one first image based on the at least one target object type, the quantity of images corresponding to each target object type, and the object type of the principal object in each first image.

In the foregoing process, for any group of target images corresponding to any piece of cover template information, the group of target images may match the cover module information.

In a possible implementation, the determining the at least one group of target images corresponding to the cover template information in the at least one first image based on the at least one target object type, the quantity of images corresponding to each target object type, and the object type of the principal object in each first image includes: obtaining a group of first images corresponding to each target object type from the at least one first image, where an object type of a principal object in a group of first images corresponding to a target object type is the target object type; sorting each group of first images in descending order of correlations between principal objects and the video; and determining the at least one group of target images based on the quantity of images corresponding to each target object type and each group of sorted first images.

In the foregoing process, there may be a relatively high correlation between the image in the at least one group of target images and the video.

In a possible implementation, determining the cover image of the video based on the any one of the at least one piece of cover template information and the at least one group of corresponding target images includes: laying out each group of target images based on layout information indicated in the cover template information, to obtain a cover image corresponding to each group of target images. A cover image corresponding to a group of target images includes the group of target images.

In a possible implementation, the plurality of key frames may be extracted from the video in the following manner: A plurality of to-be-selected frames are extracted from the video; parameter information of each to-be-selected frame is obtained, where the parameter information includes definition, picture brightness, and photographic aesthetics; and the plurality of key frames are determined in the plurality of to-be-selected frames based on the parameter information of each to-be-selected frame, where definition of each key frame is greater than or equal to preset definition, picture brightness of each key frame is between first brightness and second brightness, and composition of each key frame meets a preset aesthetic rule.

In the foregoing process, images in the plurality of extracted key frames may be in relatively high quality, and therefore the determined cover image is in relatively high quality.

In a possible implementation, object information of an object included in the cover image may be further obtained, where the object information includes an object type and/or an object name of the object; and label information of the cover image is determined based on the object information.

In the foregoing process, label information is set for each cover image, so that different cover images may be recommended to different users based on the label information of the cover image.

In a possible implementation, when at least one cover image of the video is determined, a video obtaining request corresponding to a first user may be further obtained, where the video obtaining request is used to request to obtain the video; user information of the first user is obtained; a target cover image is determined in the plurality of determined cover images based on the user information; and the video and the target cover image are sent to a terminal device corresponding to the first user

In the foregoing process, when at least one cover image of the video is determined, the user may select the target cover image from the plurality of cover images. Therefore, relatively high flexibility is achieved in determining the target cover image.

According to a second aspect, an embodiment of this application provides a cover image determining apparatus. The cover image determining apparatus is configured to perform the method according to any one of the first aspect and the possible implementations of the first aspect.

According to a third aspect, an embodiment of this application provides a cover image determining apparatus. The cover image determining apparatus includes a memory and a processor. The processor executes program instructions in the memory, so that the apparatus implements the cover image determining method according to any one of the first aspect and the possible implementations of the first aspect.

According to a fourth aspect, an embodiment of this application provides a storage medium. The storage medium is configured to store a computer program. When the computer program is executed by a computer or a processor, the cover image determining method according to any one of the first aspect and the possible implementations of the first aspect is implemented.

According to a fourth aspect, an embodiment of this application provides a computer program product. The computer program product includes instructions, and when the instructions are executed, a computer is enabled to perform the cover image determining method according to any one of the first aspect and the possible implementations of the first aspect.

According to a fifth aspect, an embodiment of this application provides a system-on-chip or a system chip. The system-on-chip or system chip may be applied to a terminal device, and the system-on-chip or system chip includes at least one communications interface, at least one processor, and at least one memory. The communications interface, the memory, and the processor are interconnected by using a bus. The processor executes instructions stored in the memory, so that the terminal device can perform the cover image determining method according to any one of the first aspect and the possible implementations of the first aspect of this application.

According to the cover image determining method and apparatus, and the device provided in the embodiments of this application, the plurality of key frames are first extracted from the video; the at least one first image is determined in the plurality of key frames; and the cover image of the video is determined based on the at least one first image and the object type of the principal object in each first image. The correlation between the principal object included in the first image and the video is greater than or equal to the preset threshold, and the cover image is determined based on the first image, and therefore there is a relatively high correlation between the cover image and the video. In this way, the cover image can more accurately describe the video, and quality of the determined cover image is improved.

## BRIEF DESCRIPTION OF DRAWINGS

FIG. 1 is a schematic diagram of a cover image according to an embodiment of this application;
FIG. 2A is a schematic diagram of a principal object according to an embodiment of this application;
FIG. 2B is a schematic diagram of another principal object according to an embodiment of this application;
FIG. 2C is a schematic diagram of still another principal object according to an embodiment of this application;
FIG. 3A is a schematic diagram of an image according to an embodiment of this application;
FIG. 3B is a schematic diagram of another image according to an embodiment of this application;
FIG. 4 is a schematic diagram of a division line of rule of thirds according to an embodiment of this application;
FIG. 5A is a schematic diagram of a terminal interface in an application scenario according to an embodiment of this application;
FIG. 5B(a), FIG. 5B(b), FIG. 5B(c), and FIG. 5B(d) are a schematic diagram of a terminal interface in another application scenario according to an embodiment of this application;
FIG. 5C(a), FIG. 5C(b), and FIG. 5C(c) are a schematic diagram of a terminal interface in still another application scenario according to an embodiment of this application;
FIG. 6 is a schematic flowchart of a cover image determining method according to an embodiment of this application;
FIG. 7 is a schematic diagram of still another image according to an embodiment of this application;
FIG. 8 is a schematic diagram of yet still another image according to an embodiment of this application;
FIG. 9 is a schematic diagram of still another cover image according to an embodiment of this application;
FIG. 10A is a schematic diagram of a cover template image according to an embodiment of this application;
FIG. 10B is a schematic diagram of another cover template image according to an embodiment of this application;
FIG. 10C is a schematic diagram of still another cover template image according to an embodiment of this application;
FIG. 10D is a schematic diagram of yet another cover template image according to an embodiment of this application;
FIG. 11 is a schematic flowchart of another cover image determining method according to an embodiment of this application;
FIG. 12 is an architectural diagram of a cover image determining method according to an embodiment of this application;
FIG. 13A, FIG. 13B, FIG. 13C, and FIG. 13D are an interface diagram of a terminal device according to an embodiment of this application;
FIG. 14 is a schematic diagram of a structure of a cover image determining apparatus according to an embodiment of this application; and
FIG. 15 is a schematic diagram of a structure of a terminal device according to an embodiment of this application.

## DESCRIPTION OF EMBODIMENTS

For ease of understanding, concepts in this application are first described.

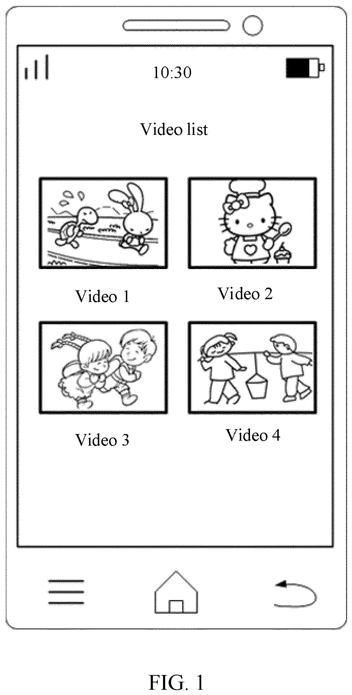

A cover image may also be referred to as a cover image of a video. For example, the cover image may be an image displayed when a terminal device displays the video in a non-played state. The cover image is described below with reference to FIG. 1. FIG. 1 is a schematic diagram of a cover image according to an embodiment of this application. Referring to FIG. 1, a page currently displayed by a terminal device is a video list page, and a video list on the video list page includes four videos: a video 1, a video 2, a video 3, and a video 4. Four images displayed by the terminal device on the video list page are cover images of the four videos. For example, a first image (an image shown in the first row and the first column) displayed by the terminal device is a cover image of the video 1, and a second image (an image shown in the first row and the second column) displayed by the terminal device is a cover image of the video 2. The terminal device may be a mobile phone, a computer, a vehicle-mounted device, a wearable device, an industrial device, an artificial intelligence device/augmented reality (augmented reality, AR) device, a virtual reality (virtual reality, VR) device, or the like.

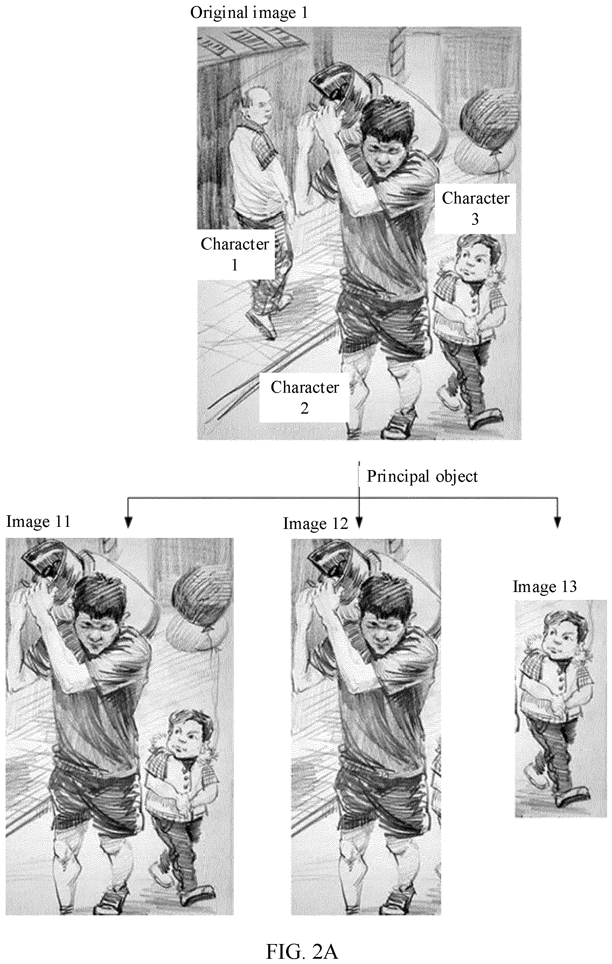

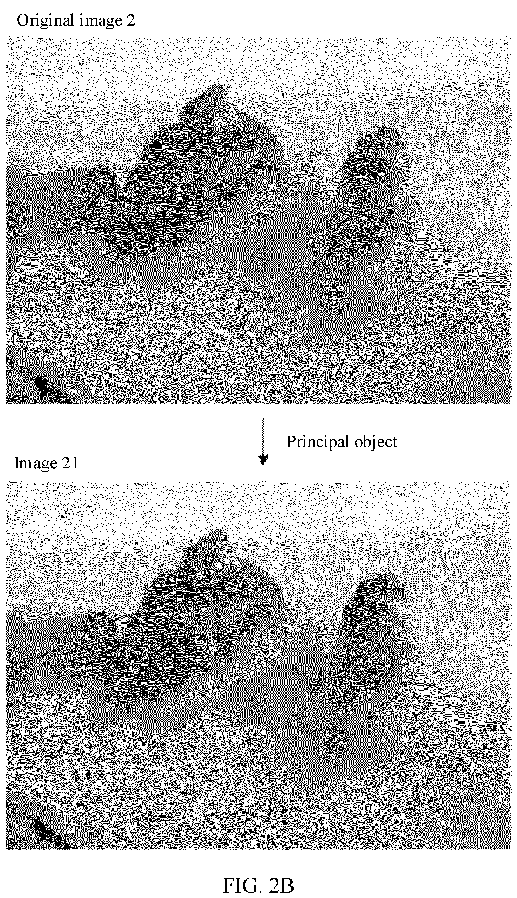

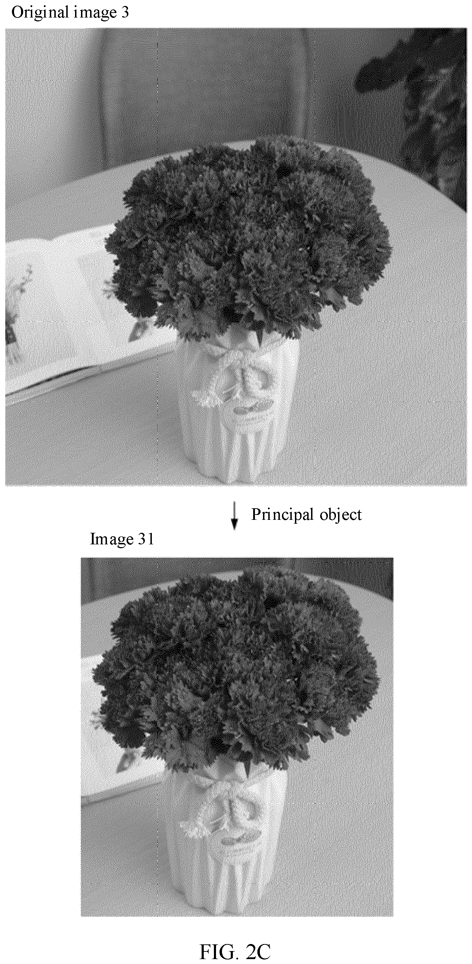

A principal object may also be referred to as a salient object, and is a relatively salient object included in an image. That is, when a user observes the image, the user pays attention to (or is interested in) the principal object. The principal object may be a character, an item (for example, an airplane, a car, a flower, a diamond ring, or a church), a landscape, a scene, or the like. There may be one or more principal objects in one image. The principal object in the image is described below with reference to FIG. 2A to FIG. 2C. FIG. 2A is a schematic diagram of a principal object according to an embodiment of this application. Referring to FIG. 2A, an original image 1 includes three characters and some backgrounds, and the three characters are a character 1, a character 2, and a character 3. When a user views the original image 1, the user usually pays attention to the character 2 and the character 3. An object to which the user pays attention may vary with a preference of the user. For example, the user may pay attention only to the character 2, or the user may pay attention to both the character 2 and the character 3, or the user may pay attention only to the character 3. Therefore, a principal object determined in the original image 1 may be the character 2 and the character 3 included in an image 11, or the character 2 included in an image 12, or the character 3 included in an image 13. FIG. 2B is a schematic diagram of another principal object according to an embodiment of this application. Referring to FIG. 2B, an original image 2 is a landscape image. When a user views the original image 2, the user pays attention to an entire landscape. Therefore, a principal object in the original image 2 may be the entire landscape. That is, the principal object determined in the original image 2 may be the landscape in an image 21. FIG. 2C is a schematic diagram of still another principal object according to an embodiment of this application. Referring to FIG. 2C, an original image 3 includes a bunch of flowers. When a user views the original image 3, the user pays attention to the bunch of flowers. Therefore, a principal object in the original image 3 may be the bunch of flowers. That is, the principal object determined in the original image 3 may be the bunch of flowers in an image 31.

Correlation between a principal object and a video refers to a contribution of the principal object to plot development of the video. A greater contribution of the principal object to the plot development of the video indicates a higher correlation between the principal object and the video. For example, if a video is a video of a character type, there is a relatively high correlation between a protagonist in the video and the video. For example, if a story plot of a video is a wedding process, and there is a chair in a wedding scene in the video, there is relatively low correlation between the chair and the video because the chair exerts no impact on development of a wedding plot.

Definition refers to clarity of each detail shadow in an image and a boundary of the image. The definition of the image is related to a gradient of the image in a horizontal direction and a gradient of the image in a vertical direction. For example, the definition of the image may be determined by using the following formula: $\sqrt{(\Delta_x I_{gray})^2 + (\Delta_y I_{gray})^2}$, where $(\Delta_x I_{gray})^2$ is the gradient of the image in the horizontal direction (a direction x), and $(\Delta_y I_{gray})^2$ is the gradient of the image in the vertical direction (a direction y).

Brightness of an image is brightness of a picture presented in the image. Brightness of a pixel in the image may be obtained, and the brightness of the image is determined based on the brightness of the pixel in the image. The brightness of the pixel may be determined based on an R value, a G value, and a B value of the pixel. For example, the brightness of the pixel may be 0.229×R value+0.587×G value+0.114×B value. An average value of brightness of pixels in the image may be determined as the brightness of the image. To reduce a calculation amount, the brightness of the image may be determined based on brightness of some pixels in the image. For example, 50% of pixels are evenly extracted from the image, and the brightness of the image is determined based on brightness of the 50% of pixels. Certainly, the brightness of the image may be determined in another manner. This is not specifically limited in this application.

Composition may also be referred to as a structure of an image, and refers to a distribution structure, in the image, of objects in the image. Whether the image has good composition may be measured by using balance of the image, whether a principal object in the image is close to a division line of rule of thirds, information indicating whether the principal object in the image is close to a middle position, and the like.

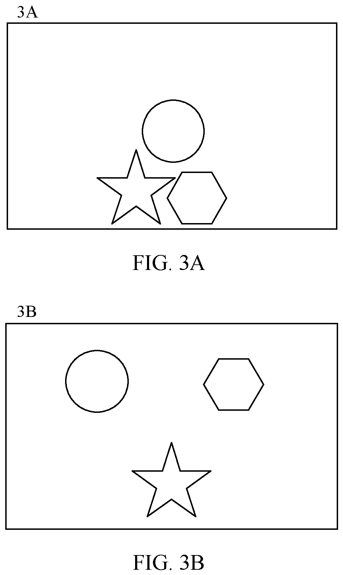

Balance of an image refers to whether objects (a character, an animal, an item, and the like) in the image are evenly distributed in the image. If the objects in the image are concentrated in one region of the image, and other regions of the image remain blank, the balance of the image is relatively poor. If the objects in the image are evenly distributed in regions of the image, the balance of the image is relatively good. Better balance indicates better composition of the image. The balance of the image is described below with reference to FIG. 3. FIG. 3A is a schematic diagram of an image according to an embodiment of this application. FIG. 3B is a schematic diagram of another image according to an embodiment of this application. Referring to FIG. 3A, an image 3A includes three objects: a circle, a five-pointed star, and a hexagon. The three objects are concentrated in one region of the image, and other regions of the image remain blank. In this case, balance of the image 3A is relatively poor. Referring to FIG. 3B, an image 3B includes three objects: a circle, a five-pointed star, and a hexagon. The three objects are evenly distributed in regions of the image. In this case, balance of the image 3B is relatively good.

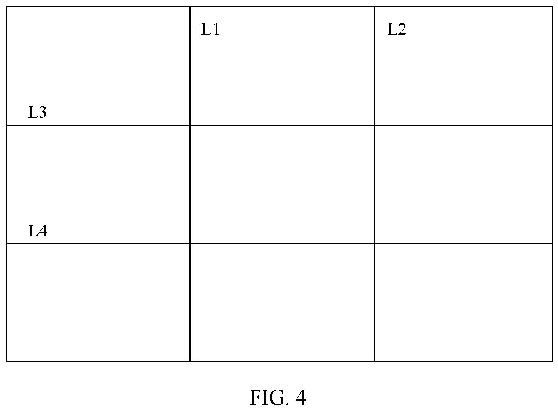

Division lines of rule of thirds of an image include an upper division line of rule of thirds, a lower division line of rule of thirds, a left division line of rule of thirds, and a right division line of rule of thirds. The division line of rule of thirds of the image is described below with reference to FIG. 4. FIG. 4 is a schematic diagram of a division line of rule of thirds according to an embodiment of this application. Referring to FIG. 4, an image may be evenly divided into three parts by a straight line L3 and a straight line L4 in a vertical direction, where L3 is an upper division line of rule of thirds of the image, and L4 is a lower division line of rule of thirds of the image. Referring to FIG. 4, the image may be evenly divided into three parts by a straight line L1 and a straight line L2 in a horizontal direction, where L1 is a left division line of rule of thirds of the image, and L2 is a right division line of rule of thirds of the image. If a principal object in the image is located near the division line of rule of thirds of the image, the image has relatively good composition.

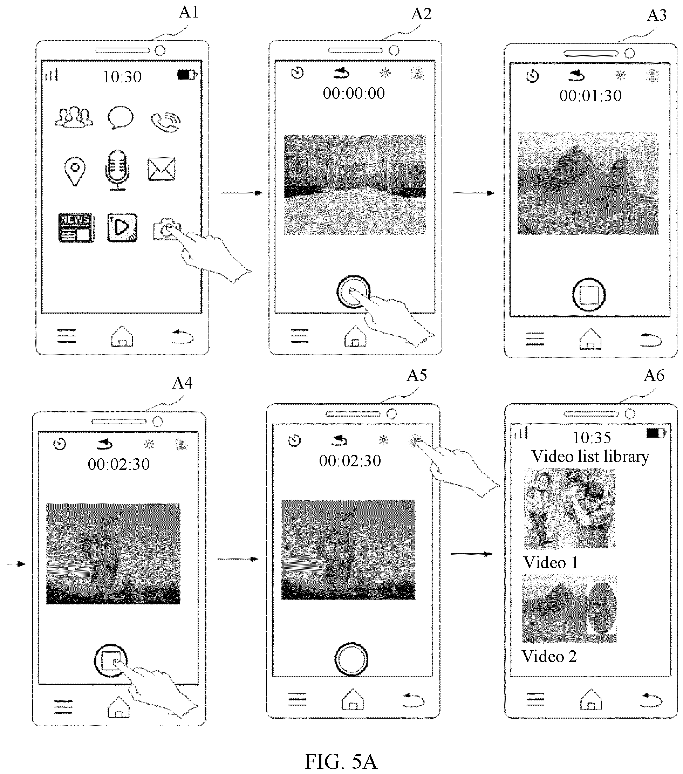

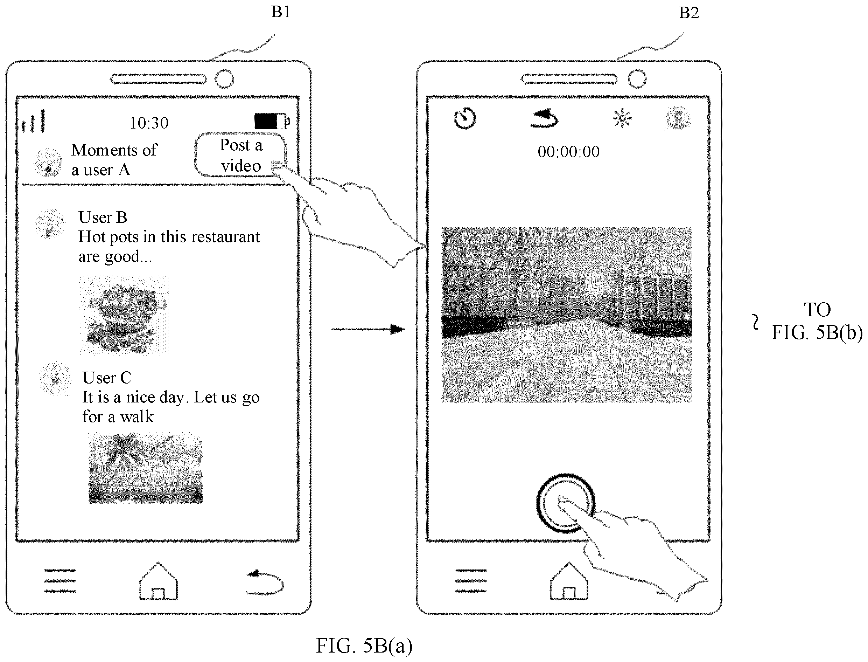

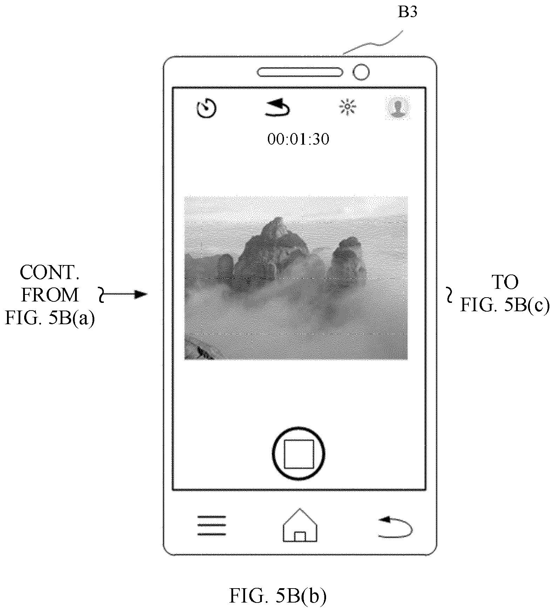

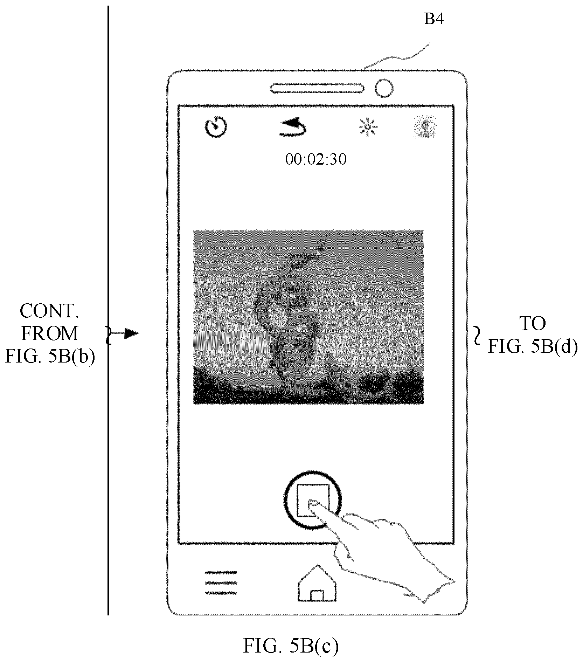

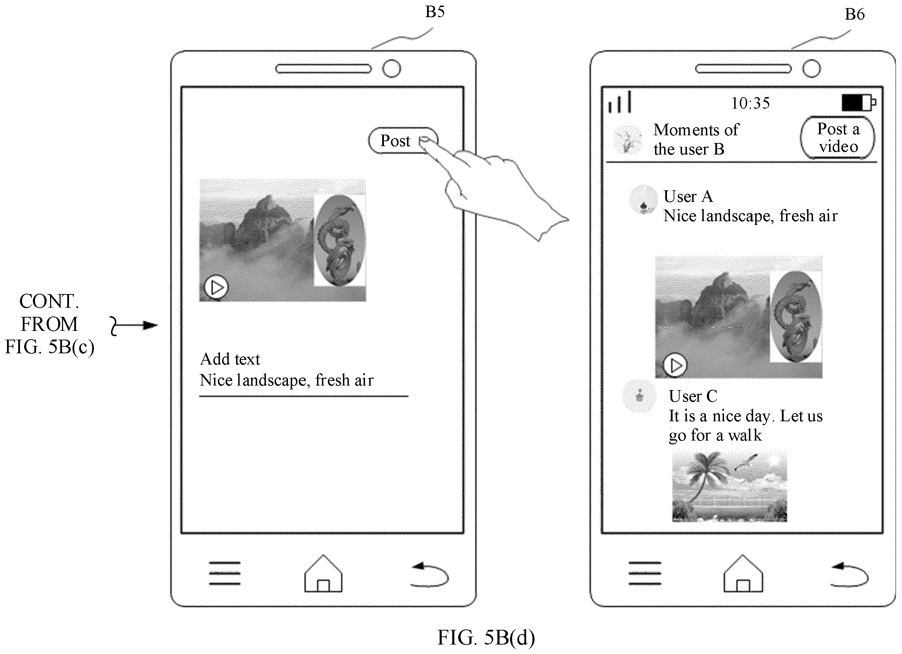

Semantic information of a video is information used to describe content (plot) of the video. The semantic information of the video may further include a type of the video. The type of the video may be a love type, a war type, a sports type, a funny type, or the like. For example, if a video is a video of making a proposal, semantic information of the video may include a love video and information indicating that flowers and candles are arranged in an auditorium, a character 1 presents flowers to a character 2, and the character 1 puts a diamond ring on a finger of the character 2. For ease of understanding, application scenarios to which this application may be applied are described below with reference to FIG. 5A, FIG. 5B(a), FIG. 5B(b), FIG. 5B(c), and FIG. 5B(d).

FIG. 5A is a schematic diagram of a terminal interface in an application scenario according to an embodiment of this application. Referring to FIG. 5A, a terminal device is a mobile phone, and terminal interfaces include an interface A1 to an interface A6.

Referring to the interface A1, icons of a plurality of applications are displayed on a desktop of the mobile phone. When a user wants to capture a video, the user may tap an icon of a camera application, so that the mobile phone starts a camera.

Referring to an interface A2, the interface A2 is a video capture interface of the mobile phone. The video capture interface includes a video capture operation icon, and the user may perform a tap operation on the video capture operation icon, so that the camera starts video capture.

Referring to an interface A3, a picture displayed on the interface A3 is a picture captured in a video capture process. Referring to an interface A4, when completing video capture, the user may perform a tap operation on the video capture operation icon, so that the camera stops video capture.

Referring to an interface A5, when the user needs to view a list of captured videos, the user may perform a tap operation on a video list image on the interface A5, so that the mobile phone displays a local video list.

Referring to the interface A6, the mobile phone displays the video list. The video list includes a video (video 2) just captured. If the user highlights a landscape of a high mountain and details of a sculpture in a process of capturing the video 2, the mobile phone may determine a cover image of the video 2 based on content of the captured video 2. The cover image of the video 2 includes the landscape of a high mountain and the details of the sculpture. The cover image may truly reflect the content of the video 2.

FIG. 5B(a), FIG. 5B(b), FIG. 5B(c), and FIG. 5B(d) are a schematic diagram of a terminal interface in another application scenario according to an embodiment of this application. Referring to FIG. 5B(a), FIG. 5B(b), FIG. 5B(c), and FIG. 5B(d), a terminal device is a mobile phone, and terminal interfaces include an interface B 1 to an interface B6. The interface B1 to an interface B5 are interfaces in a mobile phone of a user A, and the interface B6 is an interface in a mobile phone of a user B.

Referring to the interface B 1, the user A may view Moments by using an application in the mobile phone, and Moments of the user A includes a message posted by a friend of the user A. The user A may further post a message by using the mobile phone. For example, the user A may post a video by using the mobile phone. When the user A needs to post a video, the user A may perform a tap operation on a "post a video" icon on the interface B 1, so that the mobile phone starts a camera for video capture.

An interface B2 to an interface B4 show a process of capturing a video by the user A. For the process, refer to the video capture process in the embodiment shown in FIG. 3. Details are not described herein.

Referring to the interface B5, if the video captured in the embodiment in FIG. 4 is the same as the video 2 in the embodiment in FIG. 3, the mobile phone may generate a cover image of the video. The cover image of the video is the same as the determined cover image of the video 2 in the embodiment in FIG. 3. Details are not described herein. The mobile phone displays the video cover image. The user may add text, and perform a tap operation on a "post" icon to post the video.

Referring to the interface B6, when a friend, namely, the user B, of the user A views Moments by using the mobile phone of the user B, the user B may view the video posted by the user A. The cover image of the video is shown on the interface B6. The cover image may truly reflect content of the video 2. Optionally, to distinguish between a video and an image in Moments, a video icon may be added to a lower left corner of a video.

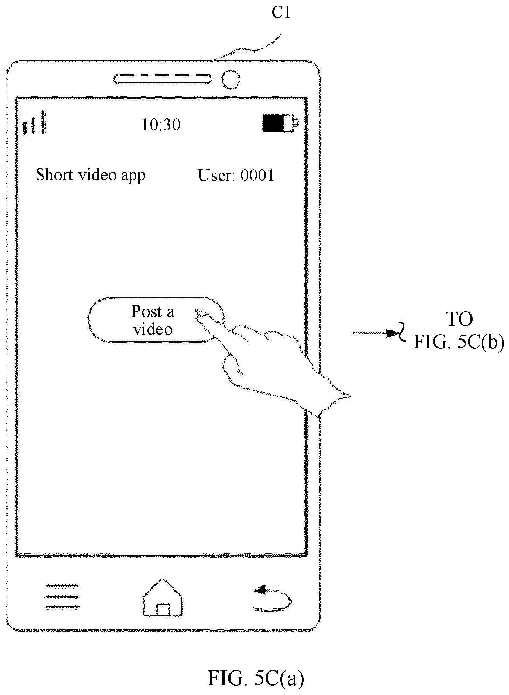

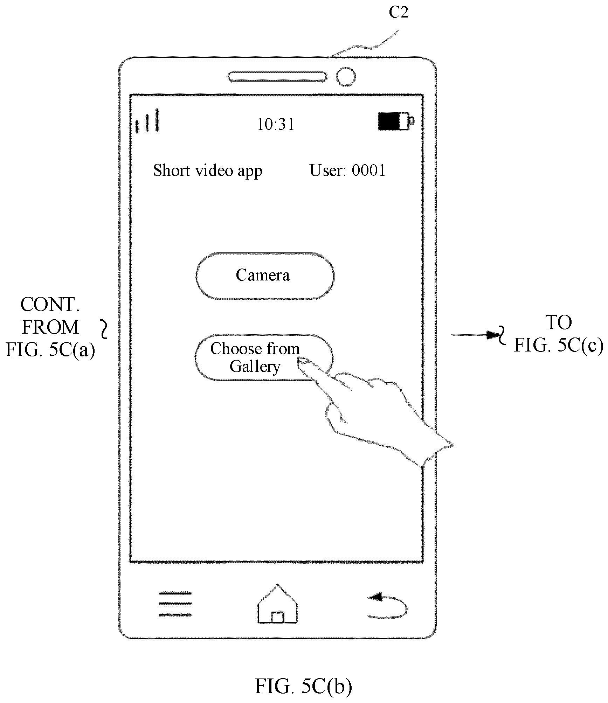

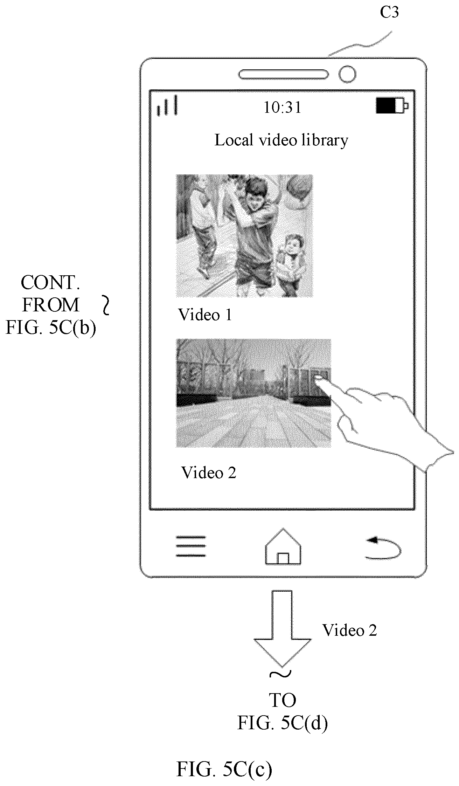

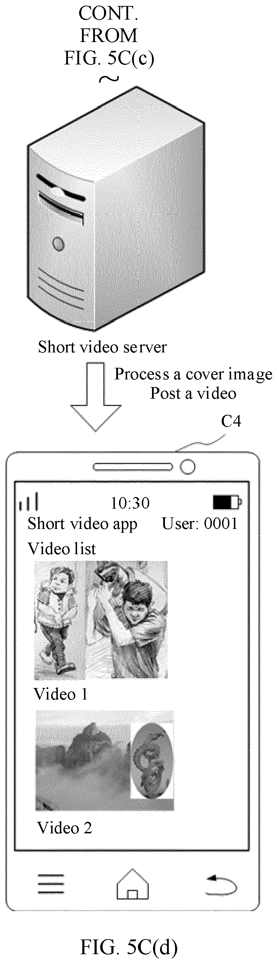

FIG. 5C(a), FIG. 5C(b), and FIG. 5C(c) are a schematic diagram of a terminal interface in still another application scenario according to an embodiment of this application. Referring to FIG. 5C(a), FIG. 5C(b), and FIG. 5C(c), a terminal device is a mobile phone, and terminal interfaces include an interface C1 to an interface C4.

Referring to the interface C1, if a short video app is installed in the mobile phone, a user may post a video by using the short video app, or may view, by using the short video app, a short video posted by the user or another user. When the user needs to post a short video by using the short video app, the user may perform a tap operation on a "post a video" icon on the interface C1, so that the mobile phone displays an interface C2.

Referring to the interface C2, a "camera" icon and a "choose from gallery" icon. The user may tap the "camera" icon to enable the mobile phone to capture a video, and post the captured video. The user may tap the "choose from gallery" icon to post a video locally stored in the mobile phone. If the user needs to post a video locally stored in the mobile phone, the user may tap the "choose from gallery" icon, so that the mobile phone displays an interface C3. Referring to the interface C3, the mobile phone displays a local video library. The local video library includes a video 1 and a video 2. It is assumed that the video 2 is the same as the video 2 in the embodiment in FIG. 3. When the mobile phone locally displays the video 2, a first frame in the video 2 is used as a cover image of the video 2. The cover image cannot truly reflect real content of the video 2. If the user needs to post the video 2, the user may select the video 2 from the local video library, so that the mobile phone sends the video 2 to a short video server.

After receiving the video 2, the short video server determines the cover image of the video 2 based on the content of the video 2, and posts the video 2. It is assumed that the cover image, of the video 2, determined by the short video server is the same as the cover image of the video 2 shown in the embodiment in FIG. 3.

Referring to the interface C4, after the short video server successfully posts the video 2, the user may view the successfully posted video 2 in the mobile phone. The cover image of the video 2 is shown on the interface C4. The cover image may truly reflect the content of the video 2.

It should be noted that FIG. 5A to FIG. 5C(a), FIG. 5C(b), and FIG. 5C(c) merely illustrate several possible application scenarios by using examples, and are not intended to limit the application scenario. For example, in the foregoing application scenario, a plurality of video covers may be determined, and the user selects one or more video covers from the plurality of video covers.

The following describes in detail the technical solutions of this application by using specific embodiments. It should be noted that the following embodiments may exist alone or may be combined with each other. Same or similar content is not repeatedly described in different embodiments.

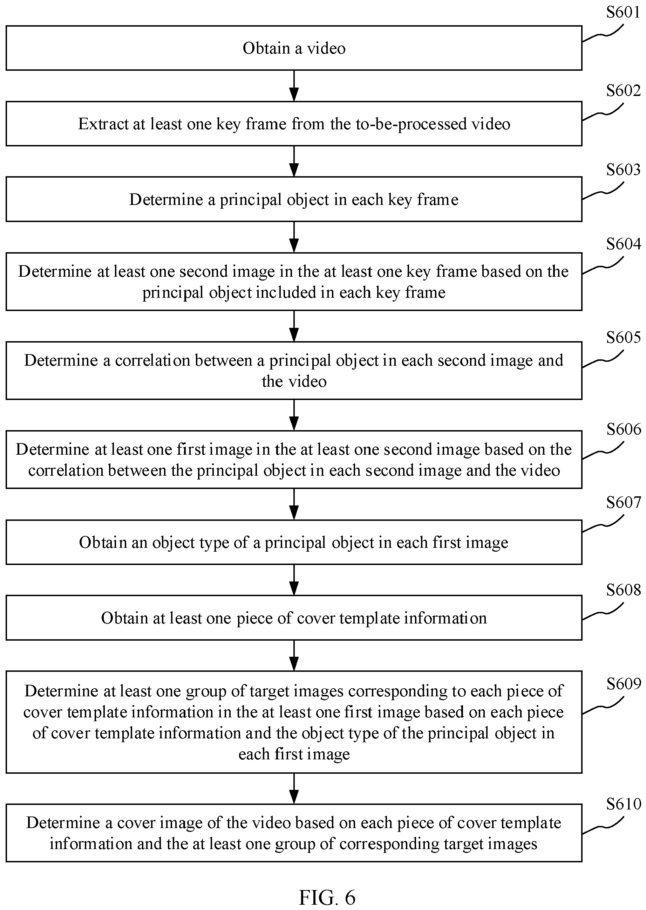

FIG. 6 is a schematic flowchart of a cover image determining method according to an embodiment of this application. Refer to FIG. 6. The method may include the following steps.

S601. Obtain a video.

This embodiment of this application may be executed by a terminal device, a server, or a cover image determining apparatus disposed in a terminal device or a server. Optionally, the cover image determining apparatus may be implemented by using software or a combination of software and hardware.

Optionally, execution of the embodiment shown in FIG. 6 may be started under triggering by a user. A manner of triggering, by the user, execution of the embodiment shown in FIG. 6 varies with an application scenario. For example, when the application scenario is the application scenario shown in the embodiment in FIG. 3, after the user performs a tap operation on a video capture operation image on an interface 304, a mobile phone obtains a captured video, and processes the video by using the method shown in FIG. 6. For example, when the application scenario is the application scenario shown in the embodiment in FIG. 4, after the user performs a tap operation on a video capture operation image on an interface 404, a mobile phone obtains a captured video, and processes the video by using the method shown in FIG. 6. For example, when the application scenario is the application scenario shown in the embodiment in FIG. 5, after receiving the video 2 sent by the mobile phone, the short video server processes the video by using the method shown in FIG. 6.

When the embodiment shown in FIG. 6 is executed by the terminal device, the terminal device may obtain the video in the following implementation: The terminal device captures a video by using a camera apparatus, the terminal device receives a video sent by another device, the terminal device downloads a video in a network, or the like.

When the embodiment shown in FIG. 6 is executed by the server, the server may obtain the video in the following implementation: The server receives a video sent by a terminal device, the server receives a video stored by a staff member in the server, the server generates a video (for example, a video obtained by editing an existing video), or the like.

S602. Extract a plurality of key frames from the video.

Each of the plurality of key frames may meet the following features: Definition of the key frame is greater than or equal to preset definition, picture brightness of the key frame is between first brightness and second brightness, and composition of the key frame meets a preset aesthetic rule. For example, the preset aesthetic rule may include one or more of the following: Balance of an image is greater than preset balance, a position, in an image, of a principal object in the image is close to a position of a division line of rule of thirds, or a position, in an image, of a principal object in the image is close to a central position of the image. The latter two aesthetic rules do not coexist.

Optionally, the plurality of key frames may be extracted from the video in the following feasible implementation: A plurality of to-be-selected frames are extracted from the video; parameter information of each to-be-selected frame is obtained; and the plurality of key frames are determined in the plurality of to-be-selected frames based on the parameter information of each to-be-selected frame. A quantity of to-be-selected frames is greater than a quantity of key frames.

The plurality of to-be-selected frames may be extracted from the video in the following feasible implementation: In a feasible implementation, the plurality of to-be-selected frames are randomly selected from the video.

In an actual application process, the quantity of to-be-selected frames may be preset, or the quantity of to-be-selected frames to be extracted from the video may be determined based on a length of the video and a processing capability of a cover image determining device (for example, the terminal device or the processor). For example, a longer length of the video indicates a larger quantity of to-be-selected frames to be extracted from the video, and a stronger processing capability of the cover image determining device indicates a larger quantity of to-be-selected frames to be extracted from the video.

In this feasible implementation, the plurality of to-be-selected frames are randomly extracted from the video, and therefore the plurality of to-be-selected frames may be quickly extracted from the video.

In another feasible implementation, the plurality of to-be-selected frames are extracted from the video at an equal interval.

A total quantity of frames included in the video and the quantity of to-be-selected frames may be first determined, and the plurality of to-be-selected frames may be extracted from the video at an equal interval based on the total quantity of frames and the quantity of to-be-selected frames. For example, if the total quantity of frames in the video is 1000, and the quantity of to-be-selected frames is 100, a to-be-selected frame is selected every 10 frames. For example, a first frame, an eleventh frame, a twenty-first frame, and a thirty-first frame in the video may be determined as to-be-selected frames, or a second frame, a twelfth frame, a twenty-second frame, and a thirty-second frame in the video may be determined as to-be-selected frames.

In this feasible implementation, the plurality of to-be-selected frames are extracted from the video at an equal interval. In this way, a picture in the extracted to-be-selected frame can more comprehensively describe content of the video, and there can be a relatively low probability that there is a repeated frame in the to-be-selected frames.

In still another feasible implementation, the video is segmented, and the plurality of to-be-selected frames are extracted from each video segment.

All the video segments include a same quantity of video frames (or a difference between quantities of video frames included in different video segments is less than a first threshold), o all the video segments are played for same duration (or a difference between play duration of different video segments is less than a second threshold). A quantity of video segments may be preset. For example, there may be five, eight, or 10 video segments. After the video is segmented, the plurality of to-be-selected frames may be randomly extracted from each video segment.

A quantity of to-be-selected frames to be extracted from each video segment may be determined based on the quantity of to-be-selected frames and the quantity of video segments. For example, if 100 to-be-selected frames need to be extracted from the video, and there are 10 video segments, 10 frames may be selected from each video segment as to-be-selected frames.

In this feasible implementation, the to-be-selected frame is randomly extracted from each video segment. Therefore, relatively high efficiency can be achieved in obtaining the to-be-selected frame, and there can be a relatively low probability that there is a repeated frame in the to-be-selected frames.

The parameter information of the to-be-selected frame may include one or more of definition, picture brightness, and photographic aesthetics. Certainly, the parameter information of the to-be-selected frame may further include other information. This is not specifically limited in this embodiment of this application. Optionally, a to-be-selected frame, in the to-be-selected frames, whose definition is greater than or equal to the preset definition, whose picture brightness is between the first brightness and the second brightness, and whose composition meets a preset aesthetic requirement may be determined as the key frame. Optionally, if a quantity of to-be-selected frames that meet the requirement is greater than a quantity of required key frames, to-be-selected frames that meet the requirement may be evenly extracted as the key frames based on a position of the to-be-selected frame in the video. In this way, a picture in the extracted key frame can more comprehensively describe content of the video, and there can be a relatively low probability that there is a repeated frame in the key frames.

Optionally, after the plurality of key frames are determined, a repeated key frame may be removed from the plurality of key frames by using a method such as clustering and similarity detection.

S603. Determine a principal object in each key frame.

There is a same process of determining the principal object in each key frame. The following provides description by using a process of determining the principal object in any key frame as an example.

A principal object detection model may be first determined, and the principal object in the key frame may be determined based on the principal object detection model. Optionally, the principal object detection model may be obtained by performing learning on a plurality of groups of samples. Each group of samples includes a sample image and a sample principal object in the sample image. The sample principal object may be manually labeled, and one or more sample principal objects may be manually labeled in the sample image. The sample principal object may be represented by using a position (for example, a pixel position) of the sample principal object in the sample image. When the principal object in the key frame is determined by using the principal object detection model, data that represents the key frame may be input to the principal object detection model, and the principal object detection model processes the data that represents the key frame, and outputs data that represents the principal object. The data that represents the key frame may be the key frame (image), or may be the greyscale image of the key frame, or the like. The data that represents the principal object may be a position (for example, a pixel position) of the principal object in the key frame, or may be some images that include the principal object.

Optionally, one or more principal objects may be determined in one key frame, or no principal object may be determined in one key frame. That is, zero, one, or a plurality of principal objects may be determined in one key frame.

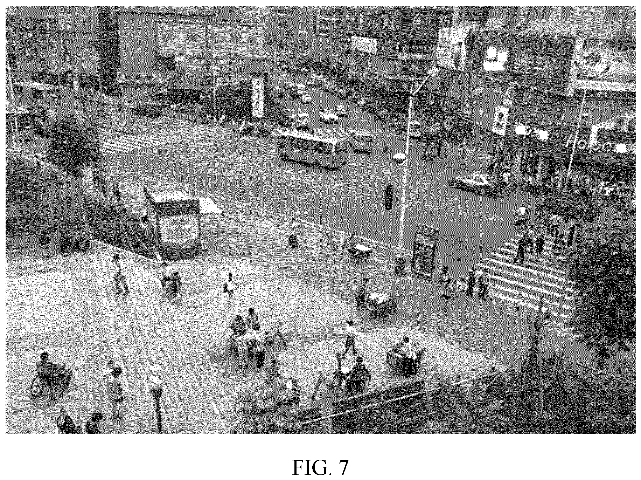

For example, referring to FIG. 2A, when the key frame is the original image 1 in FIG. 2A, three principal objects may be determined in the key frame. For example, referring to FIG. 2B to FIG. 2C, when the key frame is the original image 2 in FIG. 2B or the original image 3 in FIG. 2C, one principal object may be determined from the key frame. For example, if an image includes a plurality of objects, and the plurality of objects are similar in size, and are disorderly located in the image, no principal object may be determined in the image. For example, FIG. 7 is a schematic diagram of still another image according to an embodiment of this application. Referring to FIG. 7, the image includes a plurality of objects, and the plurality of objects are similar in size, and are disorderly located in the image. In this case, no principal object may be determined in the image shown in FIG. 7.

S604. Determine at least one second image in the plurality of key frames based on the principal object included in each key frame.

One second image includes one principal object, and the second image is some or all images in the key frame.

For example, referring to FIG. 2A, when the key frame is the original image 1 in FIG. 2A, three second images may be determined in the key frame, and the three second images are an image 11, an image 12, and an image 13. For example, referring to FIG. 2B, when the key frame is the original image 2 in FIG. 2B, one second image may be determined in the key frame, and the one second image is an image 21. For example, referring to FIG. 2C, when the key frame is the original image 3 in FIG. 2C, one second image may be determined in the key frame, and the one second image is an image 31.

S605. Determine a correlation between a principal object in each second image and the video.

There is a same process of determining the correlation between the principal object in each second image and the video. The following provides description by using a process of determining a correlation between a principal object in any second image and the video as an example.

Optionally, the correlation between the principal object in the second image and the video may be determined in at least the following two feasible implementations:

A feasible implementation is as follows:

Semantic analysis is performed on the video, to obtain semantic information of the video; object recognition processing is performed on the second image, to obtain an object name of the principal object in the second image; and the correlation between the principal object in the second image and the video is determined based on a degree of matching between the semantic information and the object name.

The semantic information of the video may be obtained in the following feasible implementation: At least one of text information corresponding to the video and image semantic information obtained by performing semantic recognition on the video frame may be obtained; and the semantic information of the video may be determined based on the at least one of the text information and the image semantic information. The text information includes a subtitle (which is usually dialogue content of characters in the video), text (for example, text on a building in a video picture) extracted from the video frame, and the like. If a video file includes the subtitle, the subtitle may be obtained from the video file. If the video file does not include the subtitle, the subtitle may be obtained by performing speech recognition on voice information in the video, or the subtitle may be obtained by recognizing the text in the video frame.

The semantic information of the video may be obtained by using a semantic recognition model. The semantic recognition model may be obtained by performing learning on a plurality of groups of samples. Each group of samples includes a sample video and sample semantic information, and the sample semantic information may be manually labeled semantic information. When the semantic information of the video is obtained by using the semantic recognition model, the video is input to the semantic recognition model, and the semantic recognition model may output the semantic information of the video.

The object name may be a character identifier, an item name, a landscape name, a scene name, or the like. For example, the character identifier may be a character 1 or a character 2. The item name may be a vehicle, an airplane, a flower, a diamond ring, an auditorium, or the like. The landscape name may be a high mountain, a beach, an ocean, a snowscape, or the like. The scene name may be a wedding, a fight, sports, indoors, or the like.

The object name may be obtained by using an object recognition model. The object recognition model may be obtained by performing learning on a plurality of groups of samples. Each group of samples includes a sample image (the sample image includes a sample object) and a sample object name. The sample object name may be a manually labeled object name. When the object name of the object in the image is obtained by using the object recognition model, the image is input to the object recognition model, and the object recognition model may output the object name of the object in the image. Optionally, each group of samples may further include a sample object type, and correspondingly, the object recognition model may further output an object type of the object.

The degree of matching between the object name and the semantic information may be obtained in the following feasible implementation: Word segmentation processing is performed on the semantic information, to obtain a plurality of words in the voice information; a similarity between the object name and each word in the semantic information is obtained; and the degree of matching between the object name and the semantic information is determined based on the similarity between the object name and each word in the semantic information. For example, a maximum similarity may be determined in similarities between the object name and all the words in the semantic information, and the maximum similarity may be determined as the degree of matching between the object name and the semantic information. Alternatively, a synonym of the object name may be obtained; a quantity of occurrences of each of the object name and the synonym of the object name in the semantic information is obtained; and the degree of matching between the object name and the semantic information is determined based on the quantity of occurrences. A larger quantity of occurrences of each of the object name and the synonym of the object name in the semantic information indicates a higher degree of matching between the object name and the semantic information. Certainly, the degree of matching between the object name and the semantic information may be determined in another manner. This is not specifically limited in this embodiment of this application.

For example, if the semantic information of the video is a love video and information indicating that flowers and candles are arranged in the auditorium, a character 1 presents flowers to a character 2, and the character 1 puts a diamond ring on a finger of the character 2, there is a relatively high degree of matching between the object name "flower" and the semantic information, and there is a relatively low degree of matching between the object name "lighting" and the semantic information.

The degree of matching between the object name of the principal object in the second image and the semantic information is positively correlated with the correlation between the principal object in the second image and the video. That is, a higher degree of matching between the object name of the principal object in the second image and the semantic information indicates a higher correlation between the principal object in the second image and the video. In this feasible implementation, the semantic information of the video may accurately describe content (plot) of the video. Therefore, the correlation between the principal object in the second image and the video may be determined based on the degree of matching between the object name and the semantic information.

Another feasible implementation is as follows:
Object information of the principal object in the second image is obtained; and the correlation between the principal object in the second image and the video is determined based on the object information of the principal object in the second image. The object information may include at least one of the following information: a quantity of occurrences of the principal object in the video and a picture percentage of the principal object in a video frame that includes the principal object.

The quantity of occurrences of the principal object in the video may be a quantity of frames that include the principal object. To reduce a calculation amount, some video frames may be extracted from the video, and a quantity of frames that include the principal object in the some video frames is determined as the quantity of occurrences.

The picture percentage of the principal object in the video frame that includes the principal object may be a ratio of an area of a minimum rectangular box in which the principal object is located to an area of the video frame. Alternatively, the picture percentage of the principal object in the video frame that includes the principal object may be a maximum value in a ratio of a horizontal size of a minimum rectangular box in which the principal object is located to a horizontal size of the video frame and a ratio of a vertical size of the minimum rectangular box in which the principal object is located to a vertical size of the video frame. The minimum rectangular box is a minimum rectangular box that can include the principal object.

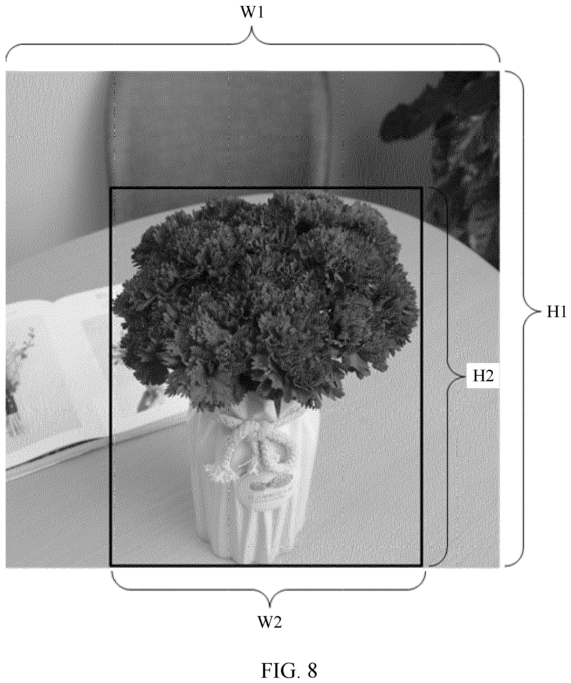

With reference to FIG. 8, the picture percentage of the principal object in the video frame that includes the principal object is described below. FIG. 8 is a schematic diagram of yet still another image according to an embodiment of this application. Referring to FIG. 8, for an image (video frame), a horizontal size is W1, and a vertical size is HI. The image includes a bunch of flowers. A minimum rectangular box in which the bunch of flowers is located is shown as a rectangular box in FIG. 8. For the minimum rectangular box, a horizontal size is W2, and a vertical size is H2. In this case, a picture percentage of a principal object (the bunch of flowers) in the image may be (W2*H2)/(W1*H1), or a picture percentage of a principal object (the bunch of flowers) in the image may be a maximum value in W2/W1 and H2/H1.

Optionally, a picture percentage of the principal object in each video frame that includes the principal object may be obtained, to obtain a plurality of picture percentages, and an average value of the plurality of picture percentages may be determined as the picture percentage of the principal object in the video frame.

When the object information includes the quantity of occurrences and the picture percentage, a weight value may be set for each of the quantity of occurrences and the picture percentage, and the correlation between the principal object and the video may be determined based on the quantity of occurrences, a weight value of the quantity of occurrences, the picture percentage, and a weight value of the picture percentage. For example, if the quantity of occurrences is m, the weight value of the quantity of occurrences is a1, the picture percentage is n, and the weight value of the picture percentage is a2, the correlation between the principal object and the video is m*a1+n*a2. Optionally, normalization processing may be further performed on m*a1+n*a2, to obtain the correlation between the principal object and the video.

In this feasible implementation, the quantity of occurrences of the principal object in the video may reflect whether the principal object is a main object in the video. A larger quantity of occurrences of the principal object in the video indicates a higher correlation between the principal object and the video. The picture percentage of the principal object in the video frame that includes the principal object may reflect whether there is a close-up of the principal object in the video. A larger picture percentage of the principal object in the video frame indicates a finer close-up of the principal object in the video and a higher correlation between the principal object and the video. Therefore, the correlation between the principal object and the video may be accurately determined based on one or more of the quantity of occurrences of the principal object in the video and the picture percentage of the principal object in the video frame that includes the principal object.

It should be noted that the manner of determining the correlation between the principal object and the video is merely illustrated above by using an example. Certainly, in an actual application process, the correlation between the principal object and the video may be determined in another feasible implementation. This is not specifically limited in this embodiment of this application.

S606. Determine at least one first image in the at least one second image based on the correlation between the principal object in each second image and the video.

A correlation between a principal object included in the first image and the video is greater than or equal to a preset threshold.

Optionally, the at least one first image may be determined in the at least one second image in the following feasible implementation:

A feasible implementation is as follows:

A second image that includes a principal object whose correlation with the video is greater than or equal to the preset correlation threshold is determined as the at least one first image.

In this feasible implementation, the at least one first image may be quickly determined in the at least one second image.

Another feasible implementation is as follows:

The at least one second image is sorted in descending order of correlations between principal objects and the video, and first N second images in the sorted second image are determined as the at least one first image, where N is an integer greater than or equal to 1.

In this feasible implementation, a value of N may be set based on an actual requirement. In this way, the at least one first image can be quickly determined, and there can be relatively high flexibility in terms of a quantity of selected first images.

Still another feasible implementation is as follows:

An object type of each principal object is determined; second images of each object type are sorted in descending order of correlations between principal objects and the video; and first M second images in the second images corresponding to each object type are determined as first images, where M is an integer greater than or equal to 1.

The object type is one of the following: a character type, an item type, a landscape type, or a scene type. For example, image recognition may be performed on the principal object, to obtain the object type of the principal object.

For example, a plurality of second images whose object type is a character type may be sorted, and first M images in the plurality of sorted second images may be determined as first images corresponding to the character type. For example, a plurality of second images whose object type is a landscape type may be sorted, and first M images in the plurality of sorted second images may be determined as first images corresponding to the landscape type.

In this feasible implementation, the at least one determined image may include an image corresponding to each object type.

S607. Obtain an object type of a principal object in each first image.

Optionally, the object type of the principal object in the first image may be obtained by using the object recognition model shown in S605. Details are not described herein.

It should be noted that if the object type of the principal object in the first image (or the second image) is obtained in a step before S608, S608 does not need to be performed.

S608. Obtain at least one piece of cover template information.

The cover template information is used to indicate a quantity of images included in a cover image, an object type of a principal object in the image, and an image layout manner.

The cover template information may be preset. One or a plurality of pieces of cover template information may be obtained. In an actual application process, in some application scenarios, one cover image of the video needs to be determined, and in some application scenarios, a plurality of cover images of the video need to be determined. For example, in the application scenarios shown in FIG. 5A to FIG. 5C(a), FIG. 5C(b), and FIG. 5C(c), one cover image of the video needs to be determined. For example, when an application scenario is to recommend a plurality of cover images to the use to enable the user to select a required cover image from the plurality of cover images, or when an application scenario is to present different cover images to different users, the plurality of cover images of the video need to be determined. When one cover image of the video needs to be determined, one piece of cover template information is obtained. When a plurality of cover images of the video need to be determined, one or more pieces of cover template information are obtained.

Optionally, the at least one piece of cover template information may be obtained in the following two feasible implementations:

In a feasible implementation, the at least one piece of cover template information is obtained based on a type of the video.

Optionally, different cover template information may be set for different types of videos. Correspondingly, the type of the video may be obtained, and the cover template information may be obtained based on the type of the video. For example, the type of the video may include a love type, a war type, a horror type, or a funny type.

In this feasible implementation, different cover model information is set for different types of videos, and correspondingly, the cover template information obtained based on the type of the video is more suitable for the video. In another feasible implementation, the at least one piece of cover template information is obtained based on user information of a user.

Optionally, the user may be a user that requests to generate the cover image, or may be a user to which the cover image is to be displayed. For example, when the application scenario is the application scenario shown in FIG. 5A, the user may be a user who captures a video. When the application scenario is the application scenario shown in FIG. 5B(a), FIG. 5B(b), FIG. 5B(c), and FIG. 5B(d), the user may be the user A, a friend, namely, the user B or a user C, of the user A, or the like.

It should be noted that when the user to which the video is to be presented is a user to be determined, the cover template information may be obtained based on a type of the video, or all preset cover template information may be obtained. Optionally, the user information includes an object type preferred by the user. For example, the object type preferred by the user includes the character type, the landscape type, or the like.

The user information may be matched with an object type indicated in the cover template information, and cover model information whose degree of matching with the user information is greater than a preset threshold is determined as the at least one piece of cover template information.

In this feasible implementation, the at least one piece of cover template information is obtained based on the user information of the user. Therefore, a cover image generated based on the cover template information can better meet a requirement of the user.

Optionally, the cover template information may be in any one of the following forms:

The cover template information exists in a possible form of text (or code).

The cover template information includes at least one image identifier, an object type corresponding to each image identifier, and layout information corresponding to each image identifier. The layout information includes a shape of an image corresponding to the image identifier and a position of the image in a cover image.

For example, the cover template information may be shown in Table 1:

Table 1

| Image identifier | Object type | Layout information |
|---|---|---|
| Image 1 | Landscape | Rectangle, occupying 100% of the cover image |
| Image 2 | sculpture | Rectangle, above the image 1, located between (a1, b1) and (a2, b2) |

It may be learned from Table 1 that the cover image needs to include two images: the image 1 and the image 2. A principal object in the image 1 is a landscape, a shape of the image 1 in the cover image is a rectangle, and the image 1 occupies the entire cover image. A principal object in the image 2 is a sculpture, a shape of the image 2 in the cover image is a rectangle, and a position of the image 2 in the cover image is a rectangular region formed by using coordinates (a1, b1) and coordinates (a2, b2). The coordinates (a1, b1) and the coordinates (a2, b2) are coordinates of two endpoints of a diagonal line of the rectangular region. For example, the coordinates (a1, b1) may be coordinates of an upper left corner of the rectangular region, and the coordinates (a2, b2) may be coordinates of a lower right corner of the rectangular region.

Table 1 merely illustrates the cover template information by using an example. Certainly, the cover template information may be in another form. This is not specifically limited in this embodiment of this application.

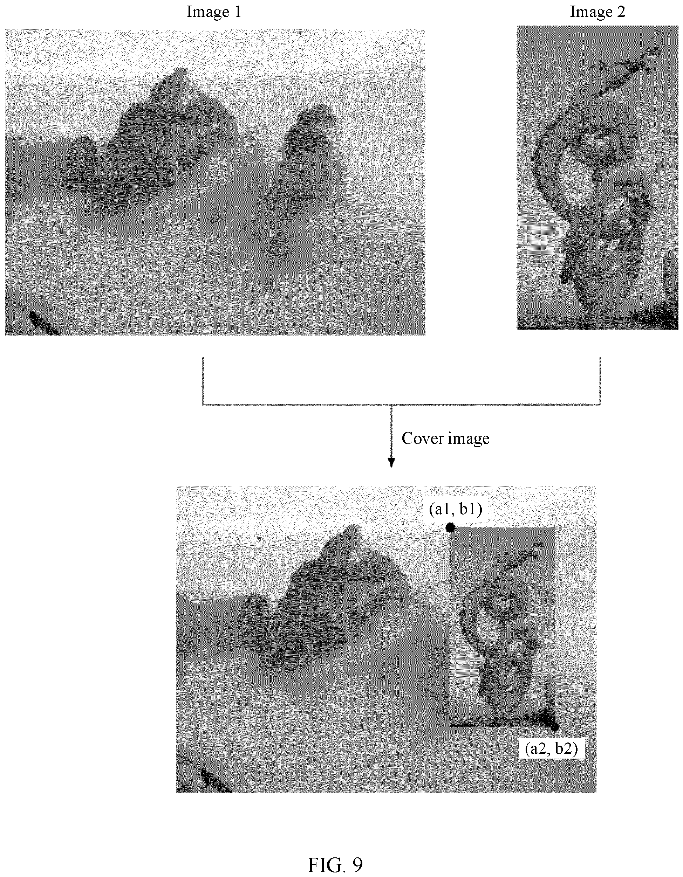

With reference to FIG. 9, the cover template information is described below by using a specific example.

FIG. 9 is a schematic diagram of still another cover image according to an embodiment of this application. Referring to FIG. 9, both an image 1 and an image 2 are shown in FIG. 9. It is assumed that the cover template information is shown in Table 1. In this case, the image 1 and the image 2 are laid out based on the cover template information, to obtain a cover image shown in FIG. 9. In the cover image shown in FIG. 9, the image 1 occupies the entire cover image, the image 2 is located above the image 1, and for a rectangular region in which the image 2 is located, coordinates of an upper left corner are (a1, b1), and coordinates of a lower right corner are (a2, b2).

In the foregoing process, the cover template information exists in the form of text (code). When the cover template information needs to be modified, only the text (code) needs to be modified. Therefore, an operation is simple and convenient, and it is easy to maintain the cover template information.

The cover template information exists in another possible form of a combination of an image and text.

The cover template information includes a cover template image, and the cover template image includes at least one image supplementation region. The cover template information further includes an object type corresponding to each image supplementation region. The object type corresponding to the image supplementation region is an object type of a principal object in an image to be supplemented to the image supplementation region.

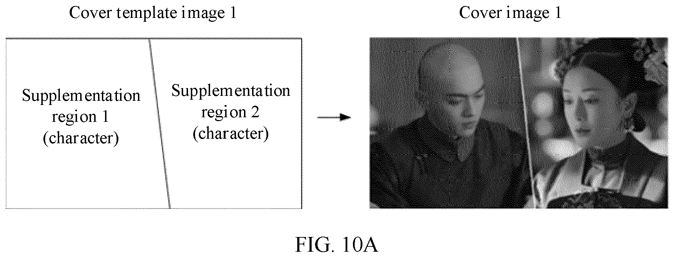

The cover template image is described below with reference to FIG. 10A to FIG. 10D.

FIG. 10A is a schematic diagram of a cover template image according to an embodiment of this application. Referring to FIG. 10A, a cover template image 1 includes two supplementation regions: a supplementation region 1 and a supplementation region 2, and the two supplementation regions are separated by using a division line. It is assumed that the cover template information indicates that the supplementation region 1 is used to supplement an image in which a principal object is a character, and indicates that the supplementation region 2 is used to supplement an image in which a principal object is a character. A cover image obtained based on the cover template image 1 may be shown as a cover image 1.

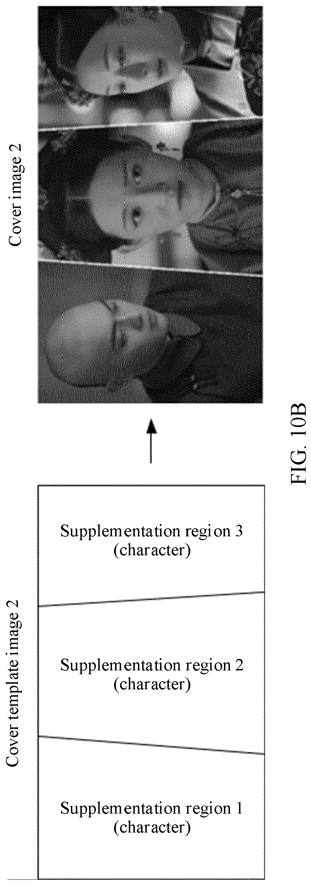

FIG. 10B is a schematic diagram of another cover template image according to an embodiment of this application. Referring to FIG. 10B, a cover template image 2 includes three supplementation regions: a supplementation region 1, a supplementation region 2, and a supplementation region 3, and the three supplementation regions are separated by using a division line. It is assumed that the cover template information indicates that the supplementation region 1 is used to supplement an image in which a principal object is a character, indicates that the supplementation region 2 is used to supplement an image in which a principal object is a character, and indicates that the supplementation region 3 is used to supplement an image in which a principal object is a character. A cover image obtained based on the cover template image 2 may be shown as a cover image 2.

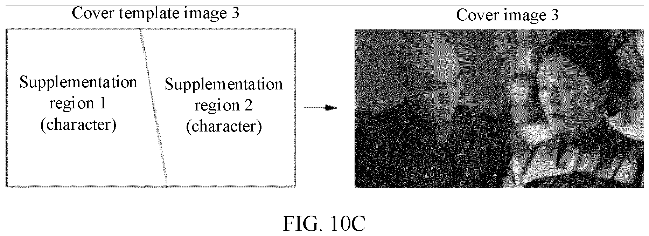

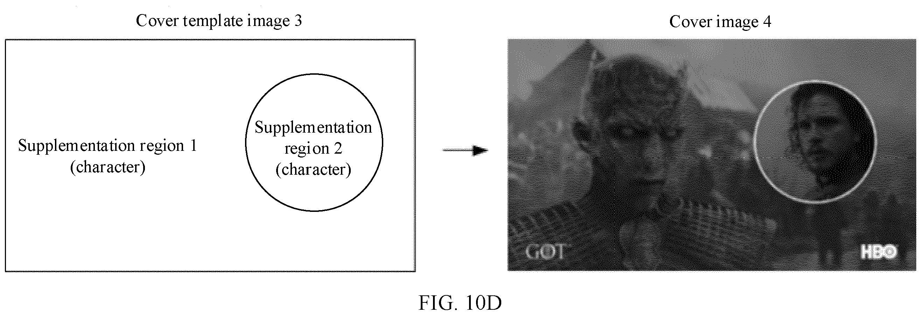

FIG. 10C is a schematic diagram of still another cover template image according to an embodiment of this application. Referring to FIG. 10C, a cover template image 3 includes two supplementation regions: a supplementation region 1 and a supplementation region 2, and there is a gradient mask for transition between the two supplementation regions. It is assumed that the cover template information indicates that the supplementation region 1 is used to supplement an image in which a principal object is a character, and indicates that the supplementation region 2 is used to supplement an image in which a principal object is a character. A cover image obtained based on the cover template image 3 may be shown as a cover image 3, and there is a gradient mask for transition between two images in the cover image 3. FIG. 10D is a schematic diagram of yet another cover template image according to an embodiment of this application. Referring to FIG. 10D, a cover template image 4 includes two supplementation regions: a supplementation region 1 and a supplementation region 2, and the two supplementation regions are separated by using a division line. It is assumed that the cover template information indicates that the supplementation region 1 is used to supplement an image in which a principal object is a character, and indicates that the supplementation region 2 is used to supplement an image in which a principal object is a character. A cover image obtained based on the cover template image 4 may be shown as a cover image 4.

In the foregoing process, the cover template information exists in the form of a combination of an image and text. When a cover image needs to be generated, only a corresponding image needs to be supplemented to the supplementation region in the cover template image. Therefore, an operation is easy and convenient, and relatively high efficiency is achieved in generating the cover image based on the cover template information.

S609. Determine at least one group of target images corresponding to each piece of cover template information in the at least one first image based on each piece of cover template information and the object type of the principal object in each first image.

Optionally, if X cover images need to be determined, X groups of target images need to be determined, where X is an integer greater than or equal to 1.

If T pieces of cover template information are obtained in S608, $X_i$ groups of target images corresponding to each piece of cover template information may be obtained, where $\sum_{i=1}^{i=T} X_i = X$ . For example, if 10 cover images need to be determined, 10 groups of target images need to be determined. If two pieces of cover template information, namely, cover template information 1 and cover template information 2, are obtained, five groups of target images corresponding to the cover template information 1 and five groups of target images corresponding to the cover template information 2 may be obtained, or six groups of target images corresponding to the cover template information 1 and four groups of target images corresponding to the cover template information 2 is obtained. For example, if one cover image needs to be determined, only one piece of cover template information needs to be obtained in S608, and only one group of target images needs to be determined in S609. There is a same process of determining the at least one group of target images corresponding to each piece of cover template information. The following provides description by using a process of determining at least one group of target images corresponding to any piece of cover template information.

Optionally, at least one target object type and a quantity of images corresponding to each target object type may be determined based on the any piece of cover template information; and the at least one group of target images corresponding to the cover template information may be determined in the at least one first image based on the at least one target object type, the quantity of images corresponding to each target object type, and the object type of the principal object in each first image. The at least one target object type is an object type of a principal object included in a cover image determined based on the cover template information, and the quantity of images corresponding to the target object type is a quantity of principal objects whose object types are the target object type and that are included in the cover image determined based on the cover template information.

The at least one target object type and the quantity of images corresponding to each target object type may be determined based on the cover template information in the following two feasible implementations:

In a feasible implementation, the cover template information exists in one possible form in S608.

In this feasible implementation, the at least one target object type and the quantity of images corresponding to each target object type may be determined based on the at least one image identifier and the object type corresponding to each image identifier that are included in the cover template information. For example, if the cover template information is shown in Table 1, it may be determined, based on Table 1, that the target object type is the landscape type and the character type, the landscape type corresponds to one image, and the character type corresponds to two images.

In another feasible implementation, the cover template information exists in the other possible form in S608.

In this feasible implementation, the at least one target object type and the quantity of images corresponding to each target object type may be determined based on the object type corresponding to each supplementation region in the cover template image. For example, if the cover template image is shown in FIG. 10A, it may be determined that the target object type is the character type, the character type corresponds to two images. If the cover template image is shown in FIG. 10B, it may be determined that the target object type is the character type, the character type corresponds to three images.

K target object types are determined based on the any piece of cover template information, and a $j^{th}$ target object type corresponds to $Y_j$ images. In this case, any group of target images corresponding to the cover template information includes K object types, and a $j^{th}$ object type corresponds to $Y_j$ images. For example, if two target object types, namely, the landscape type and the character type, are determined based on the cover template information, the landscape type corresponds to one image, and the character type corresponds to two images, the any group of target images corresponding to the cover template information includes one image of the landscape type and two images of the character type.

The at least one group of target images corresponding to the cover template information may be determined in the at least one first image based on the at least one target object type, the quantity of images corresponding to each target object type, and the object type of the principal object in each first image in the following feasible implementation:

A group of first images corresponding to each target object type is obtained from the at least one first image, where an object type of a principal object in a group of first images corresponding to a target object type is the target object type; each group of first images is sorted in descending order of correlations between principal objects and the video; and the at least one group of target images is determined based on the quantity of images corresponding to each target object type and each group of sorted first images.

For example, if two target object types, namely, the landscape type and the character type, are determined based on the cover template information, the landscape type corresponds to one image, and the character type corresponds to two images, two groups of first images may be determined in the at least one first image. One group is images of the landscape type, and the other group is images of the character type. Each of the two groups of first images is sorted, and the two groups of sorted first images may be shown in Table 2:

**Table 2**

| First group of first images | Landscape image 1, landscape image 2, landscape image 3, and landscape image 4 |
|---|---|
| Second group of first images | Character image 1, character image 2, character image 3, and character image 4 |

If five groups of target images corresponding to the cover template information need to be determined, the five groups of target images may be shown in Table 3:

**Table 3**

| First group of target images | Landscape image 1, character image 1, and character image 2 |
|---|---|
| Second group of target images | Landscape image 1, character image 1, and character image 3 |
| Third group of target images | Landscape image 1, character image 2, and character image 3 |
| Fourth group of target images | Landscape image 2, character image 1, and character image 2 |

(continued)

| Fifth group of target images | Landscape image 2, character image 1, and character image 3 |

It should be noted that Table 3 merely illustrates a plurality of groups of target images by using an example, and is not intended to limit the target image.

Optionally, when the at least one group of target images is determined, reference may be further made to an object name preferred by the user. For example, the object name preferred by the user may include a flower or an auditorium.

During selection of the target object, the object name preferred by the user may be preferentially selected. It should be noted that for the user herein, refer to the description of the user in S608. Details are not described herein.

S610. Determine a cover image of the video based on each piece of cover template information and the at least one group of corresponding target images.

A cover image may be determined based on a group of target images corresponding to each piece of cover template information. There is a same process of determining the cover image based on the group of target images corresponding to each piece of cover template information. The following provides description by using a process of determining the cover image based on any group of target images corresponding to the any piece of cover template information.

Optionally, the group of target images may be laid out based on layout information indicated in the cover template information, to obtain a cover image. Layout of the group of target images includes determining a shape, a position, a size, and a visual special effect (for example, a color gradient) of the target image in the cover image.

It should be noted that the processing steps (S601 to S610) shown in the embodiment in FIG. 6 constitute no specific limitation on the cover image determining process. In some other embodiments of this application, the cover image determining process may include more or fewer steps than those in the embodiment in FIG. 6. For example, the cover image determining process may include some steps in the embodiment in FIG. 6, some steps in the embodiment in FIG. 6 may be replaced with steps that have a same function, or some steps in the embodiment in FIG. 6 may be split into a plurality of steps.

According to the cover image determining method provided in this embodiment of this application, the plurality of key frames are first extracted from the video; the at least one first image is determined in the plurality of key frames; and the cover image of the video is determined based on the at least one first image and the object type of the principal object in each first image. The correlation between the principal object included in the first image and the video is greater than or equal to the preset threshold, and the cover image is determined based on the first image, and therefore there is a relatively high correlation between the cover image and the video. In this way, the cover image can more accurately describe the video, and quality of the determined cover image is improved.

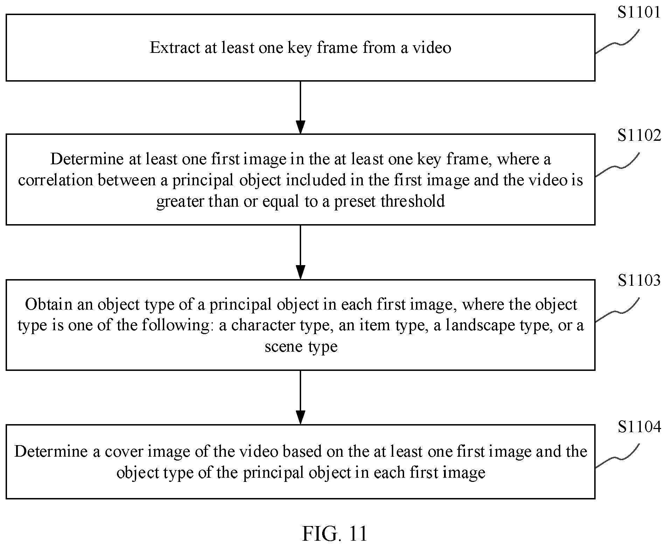

FIG. 11 is a schematic flowchart of another cover image determining method according to an embodiment of this application. Refer to FIG. 11. The method may include the following steps.

S1101. Extract a plurality of key frames from a video.

It should be noted that, for a process of performing S1101, refer to the process of performing S602. Details are not described herein again.

S1102. Determine at least one first image in the plurality of key frames, where a correlation between a principal object included in the first image and the video is greater than or equal to a preset threshold.

It should be noted that for a process of performing S1102, refer to the process of performing S603 to S606. Details are not described herein.

S1103. Obtain an object type of a principal object in each first image, where the object type is one of the following: a character type, an item type, a landscape type, or a scene type.

It should be noted that for a process of performing S1103, refer to the process of performing S607. Details are not described herein.

S1104. Determine a cover image of the video based on the at least one first image and the object type of the principal object in each first image.

It should be noted that for a process of performing S1104, refer to the process of performing S608 to S610. Details are not described herein.

In the embodiment shown in FIG. 11, the plurality of key frames are first extracted from the video; the at least one first image is determined in the plurality of key frames; and the cover image of the video is determined based on the at least one first image and the object type of the principal object in each first image. The correlation between the principal object included in the first image and the video is greater than or equal to the preset threshold, and the cover image is determined based on the first image, and therefore there is a relatively high correlation between the cover image and the video. In this way, the cover image can more accurately describe the video, and quality of the determined cover image is improved.

Based on any one of the foregoing embodiments, after the cover image of the video is determined, different processing may be performed on the cover image. For example, there may be the following feasible implementations.

In a feasible implementation, a same cover image is presented to all users.

When one cover image is determined, the cover image is determined as the cover image of the video. When the video is presented to another user, a presented cover image is the cover image.

For example, if the application scenario is the application scenario shown in FIG. 5B(a), FIG. 5B(b), FIG. 5B(c), and FIG. 5B(d), and the mobile phone determines one cover image. In this case, after the user A posts a video in Moments, all friends of the user A view a same cover image, and the same cover image is the one cover image determined by the mobile phone.

When at least one cover image is determined, the plurality of cover images are presented to the user. The user selects a cover from the plurality of cover images, and the cover image selected by the user is determined as the cover image of the video. When the video is presented to another user, a presented cover image is the cover image.

For example, if the application scenario is the application scenario shown in FIG. 5B(a), FIG. 5B(b), FIG. 5B(c), and FIG. 5B(d), and the mobile phone determines at least one cover image, after presenting the interface B4, the mobile phone further presents the plurality of cover images to the user. The user selects a cover image (not shown in FIG. 5B(a), FIG. 5B(b), FIG. 5B(c), and FIG. 5B(d)) from the plurality of cover images, and after the user A posts a video in Moments, all friends of the user A view a same cover image, namely, the cover image selected by the user A, of the video.

In another feasible implementation, different cover images are presented to different users.

In this feasible implementation, if at least one cover image is determined, when the video is presented to different users, different cover images are presented to the different users based on preferences of the users.

In this feasible implementation, label information corresponding to each cover image may be further generated, and the label information is used to describe content of the cover image. The label information may be generated based on an object name and an object type of a principal object included in the cover image. Certainly, when the label information is generated, reference may be further made to a label of the video, so that the label information of the determined cover image is more accurate. The label of the video may be a label uploaded when a user uploads the video, or a label obtained by performing learning on the video by using a model. For example, the label information corresponding to the cover image may include a name (a name of an actor and/or a role) of a character in the cover image, a name (for example, a flower, an auditorium, a diamond ring, a basketball, a vehicle, or an airplane) of an item in the cover image, a name (for example, a high mountain, a desert, an ocean, or a snowscape) of a landscape in the cover image, or a name (for example, a wedding, a fight, or ball playing) of a scene in the cover image. Optionally, cover images to be presented to different users may be determined based on the label information of the cover image and user information of the users. The user information may include an object name preferred by the user. For example, the user information may be matched with the label information of each cover image, and a cover image whose degree of matching with the user information is the highest is determined as a cover image to be presented to the user.

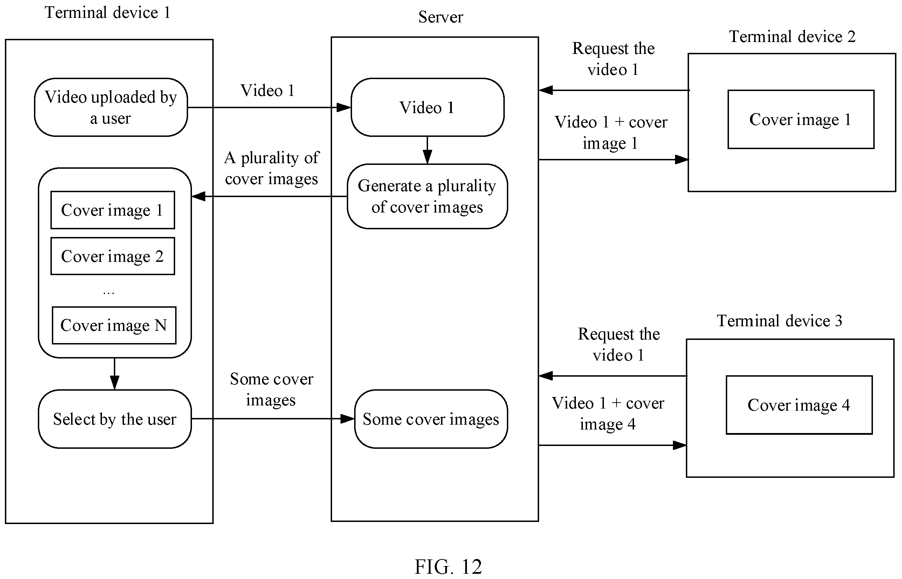

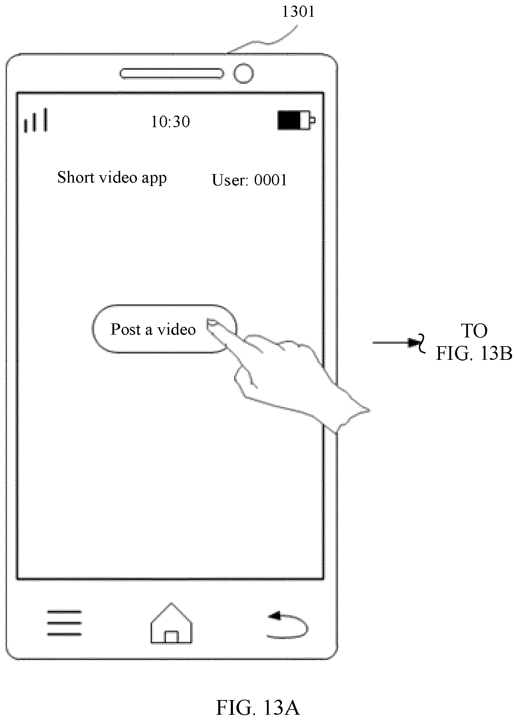

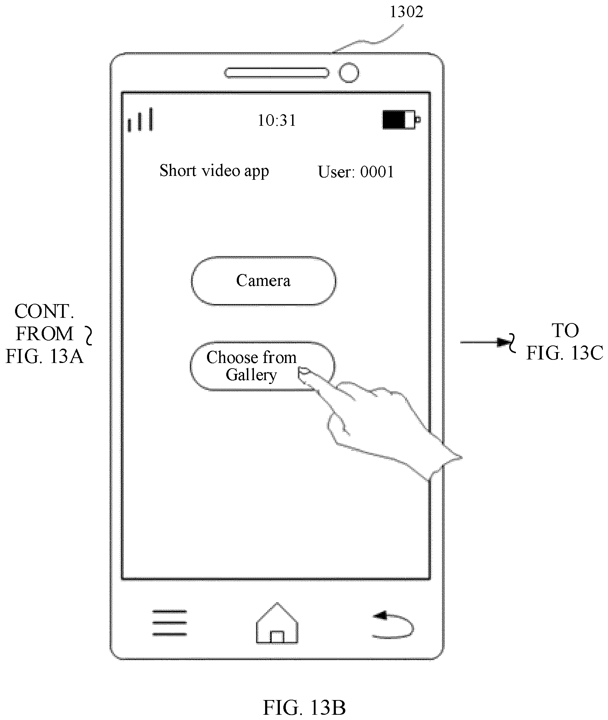

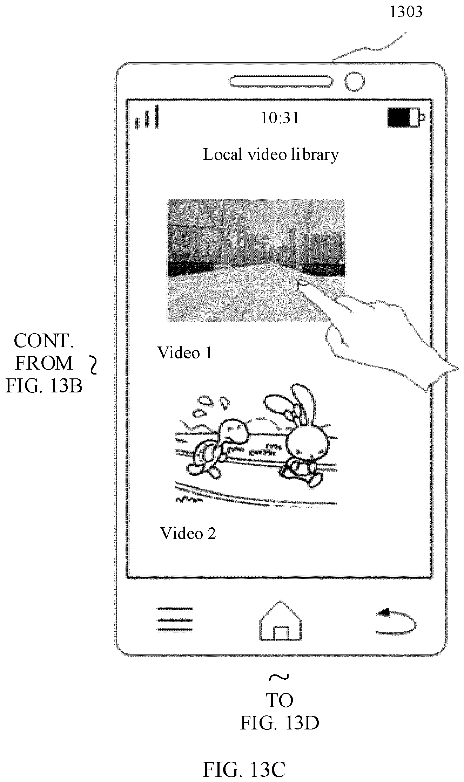

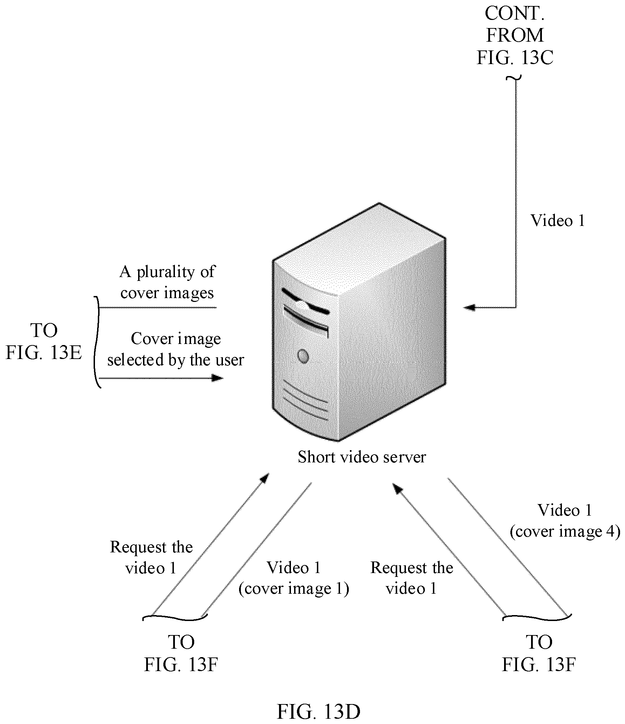

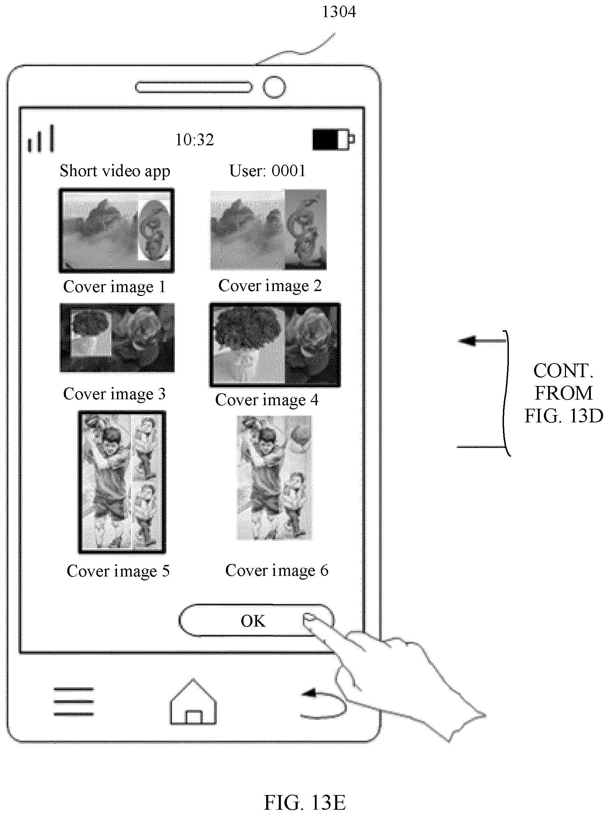

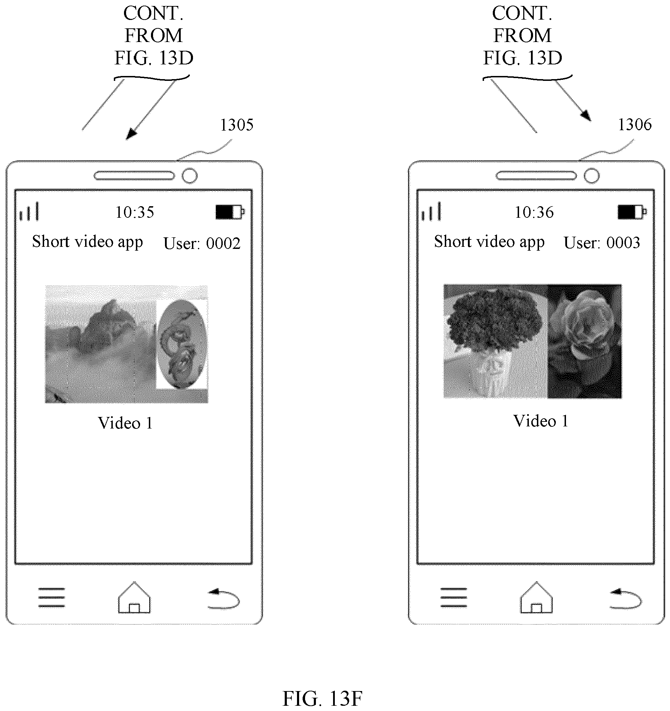

With reference to FIG. 12, FIG. 13A, FIG. 13B, FIG. 13C, and FIG. 13D, the following describes the feasible implementation by using specific examples.

FIG. 12 is an architectural diagram of a cover image determining method according to an embodiment of this application. FIG. 13A, FIG. 13B, FIG. 13C, and FIG. 13D are an interface diagram of a terminal device according to an embodiment of this application. Referring to FIG. 12, FIG. 13A, FIG. 13B, FIG. 13C, and FIG. 13D an interface 1301 to an interface 1304 are interfaces in a terminal device 1 of a user 0001, an interface 1305 is an interface in a terminal device 2 of a user 0002, and an interface 1306 is an interface in a terminal device 3 of a user 0003.

Referring to the interface 1301 to an interface 1303 in FIG. 12, FIG. 13A, FIG. 13B, FIG. 13C, and FIG. 13D the user 0001 may upload a video 1 to a server by using the terminal device 1. For description of the interface 1301 to the interface 1303, refer to the description of the interface C1 to the interface C3 in FIG. 5C(a), FIG. 5C(b), and FIG. 5C(c). Details are not described herein.

The server may generate a plurality of cover images of the video 1 based on the technical solution shown in the foregoing method embodiment, and send the plurality of cover images to the terminal device 1.

Referring to the interface 1304 in FIG. 12, FIG. 13A, FIG. 13B, FIG. 13C, and FIG. 13D, if the server sends six cover images to the terminal device, the terminal device 1 displays the six cover images, and the user may select at least one cover image from the six cover images. For example, if the user selects a cover image 1, a cover image 4, and a cover image 5, the user may send the three cover images (or identifiers of the three cover images) to the server.

Another terminal device (for example, the terminal device 2 and the terminal device 3) may request to obtain the video 1 from the server. Referring to the interfaces 1306 and 1307 in FIG. 12, FIG. 13A, FIG. 13B, FIG. 13C, and FIG. 13D, when the user 0002 requests to obtain the video 1 from the server by using the terminal device 2, the server determines, based on a preference (user information) of the user 0002, that the user 0002 prefers a landscape video, and therefore the server sends the video 1 and the cover image 1 to the terminal device 2. In this case, a cover image of the video 1 viewed by the user 0002 is the cover image 1. The user 0002 prefers the landscape video, and therefore there is a relatively high probability that the user 0002 views the video 1 based on the cover image 1. When the user 0003 requests to obtain the video 1 from the server by using the terminal device 3, the server determines, based on a preference (user information) of the user 0003, that the user 0003 prefers a plant video, and therefore the server sends the video 1 and the cover image 4 to the terminal device 3. In this case, a cover image of the video 1 viewed by the user 0003 is the cover image 4. The user 0003 prefers the plant video, and therefore there is a relatively high probability that the user 0003 views the video 1 based on the cover image 4.

An embodiment of this application provides a cover image determining apparatus. The cover image determining apparatus is configured to perform the cover image determining method shown in the foregoing method embodiment.

For example, the cover image determining apparatus may include a processing module, and the processing module may perform the cover image determining method shown in the foregoing method embodiment.

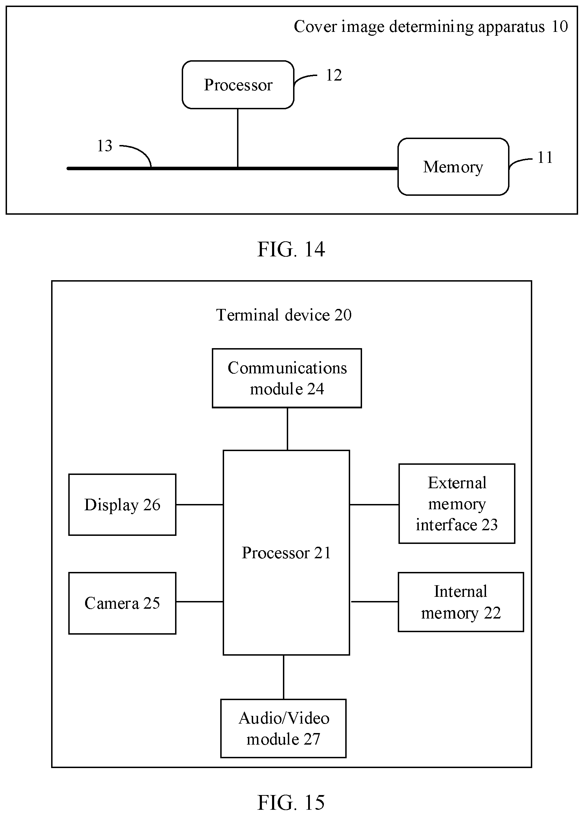

FIG. 14 is a schematic diagram of a structure of a cover image determining apparatus according to an embodiment of this application. Referring to FIG. 14, a cover image determining apparatus 10 may include a memory 11 and a processor 12. The memory 11 communicates with the processor 12. For example, the memory 11 and the processor 12 may communicate by using a communications bus 13. The memory 11 is configured to store a computer program. The processor 12 executes the computer program to implement the cover image determining method.

FIG. 15 is a schematic diagram of a structure of a terminal device according to an embodiment of this application. Referring to FIG. 15, a terminal device 20 includes a processor 21, a memory 22, a communications interface 23, a camera 24, a display screen 25, and an audio/video module 26 connected to the processor 21.

The processor 21 may include one or more processing units. For example, the processor 21 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, a memory may be further disposed in the processor 21, and is configured to store instructions and data. For example, the memory in the processor 21 may be a cache. The memory may store instructions or data just used or cyclically used by the processor 21. If the processor 21 needs to use the instructions or the data again, the processor 21 may directly invoke the instructions or the data from the memory. This avoids repeated access and reduces a waiting time of the processor 21. Therefore, system efficiency is improved.

In some embodiments, the processor 21 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like. The I2S interface may be configured to perform audio communication. In some embodiments, the processor 21 may include a plurality of groups of I2S buses. The processor 21 may be coupled to the audio/video module 27 by using the I2S bus, to implement communication between the processor 21 and the audio/video module 27.

The internal memory 22 may be configured to store computer-executable program code. The executable program code includes instructions. The internal memory 22 may include a program storage region and a data storage region. The program storage region may store an operating system, an application required by at least one function (for example, a sound playing function or an image playing function), and the like. The data storage region may store data (for example, audio data or an address book) created in a process of using the terminal device 20, and the like. In addition, the internal memory 22 may include a high-speed random access memory, and may further include a non-volatile memory, for example, at least one magnetic disk storage device, a flash memory, and a universal flash storage (universal flash storage, UFS). The processor 21 executes various functional applications of the terminal device 20 and performs data processing by running the instructions stored in the internal memory 22 and/or the instructions stored in the memory disposed in the processor.

The external memory interface 23 may be configured to connect to an external storage card such as a micro SD card, to extend a storage capability of the terminal device 20. The external storage card communicates with the processor 21 by using the external memory interface 23, to implement a data storage function. For example, files such as music and a video are stored in the external storage card.

The communications module 24 may provide a solution to wireless communication such as 2G/3G/4G/5G applied to the terminal device 20. The communications module 24 may include at least one filter, a switch, a power amplifier, a low noise amplifier (low noise amplifier, LNA), and the like. The communications module 24 may receive an electromagnetic wave through an antenna, perform processing such as filtering and amplification on the received electromagnetic wave, and transfer the electromagnetic wave to a modem processor for demodulation. The communications module 24 may further amplify a signal modulated by the modem processor, and convert the signal into an electromagnetic wave for radiation through the antenna. In some embodiments, at least some functional modules of the communications module 24 may be disposed in the processor 21. In some embodiments, at least some functional modules of the communications module 24 and at least some modules of the processor 21 may be disposed in a same component. For example, the communications module 24 may receive the video shown in this application, and store the received video in the internal memory 22, or store the received video in an external memory by using the external memory interface 23.

The camera 25 may capture an image or a video. For example, the camera 25 may capture, under control of the processor, the video shown in this application, and store the video in the internal memory 22, or store the video in the external memory by using the external memory interface 23.

The display screen 26 is configured to display an image, a video, and the like. The display screen 26 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flexible light-emitting diode (flex light-emitting diode, FLED), a mini-LED, a micro-LED, a micro-OLED, quantum dot light emitting diodes (quantum dot light emitting diodes, QLED), or the like. In some embodiments, the terminal device 20 may include one or N displays screens 26, where N is a positive integer greater than 1.

The audio/video module 27 may play a video stored in the internal memory 22 or the external memory, and display the played video on the display screen 26. For example, the audio/video module 27 is configured to convert digital audio information into analog audio signal output, and is further configured to convert analog audio input into a digital audio signal. The audio/video module 27 may be further configured to encode and decode an audio signal. In some embodiments, the audio/video module 27 may be disposed in the processor 21, or some functional modules of the audio/video module 27 may be disposed in the processor 21. The audio/video module 27 may be further configured to compress or decompress a digital video. The terminal device 20 may support one or more video codecs. In this way, the terminal device 20 may play or record videos in a plurality of encoding formats, for example, moving picture experts group (moving picture experts group, MPEG)-1, MPEG-2, MPEG-3, and MPEG-4.

An embodiment of this application provides a storage medium. The storage medium is configured to store a computer program. When the computer program is executed by a computer or a processor, the cover image determining method is implemented.

An embodiment of this application provides a computer program product. The computer program product includes instructions, and when the instructions are executed, a computer is enabled to perform the cover image determining method.

An embodiment of this application provides a system-on-chip or a system chip. The system-on-chip or system chip may be applied to a terminal device, and the system-on-chip or system chip includes at least one communications interface, at least one processor, and at least one memory. The communications interface, the memory, and the processor are interconnected by using a bus. The processor executes instructions stored in the memory, so that the terminal device can perform the cover image determining method.

All or some of the steps in the foregoing method embodiments may be implemented by hardware related to program instructions. The foregoing program may be stored in a readable memory. When the program is executed, the steps of the foregoing method embodiments are performed. The foregoing memory (storage medium) includes a read-only memory (read-only memory, ROM), a RAM, a flash memory, a hard disk, a solid-state drive, a magnetic tape (magnetic tape), a floppy disk (floppy disk), an optical disc (optical disc), and any combination thereof.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

It is clear that a person skilled in the art can make various modifications and variations to the embodiments of this application without departing from the spirit and scope of this application. This application is also intended to cover these modifications and variations provided that they fall within the scope of protection defined by the following claims and their equivalent technologies.

In this application, the term "including" and a variant thereof may refer to non-limitative inclusion, and the term "or" and a variant thereof may refer to "and/or". In this application, the terms "first", "second", and the like are intended to distinguish between similar objects but do not necessarily indicate a specific order or sequence. In this application, "a plurality of' means two or more than two. "And/or" describes an association between associated objects and indicates that three relationships may exist. For example, A and/or B may indicate the following three cases: Only A exists, both A and B exist, and only B exists. The character "/" generally indicates an "or" relationship between the associated objects.

## Claims

1.  A cover image determining method, comprising:

    extracting a plurality of key frames from a video;
    determining at least one first image in the plurality of key frames, wherein a correlation between a principal object comprised in the first image and the video is greater than or equal to a preset threshold;
    obtaining an object type of a principal object in each first image, wherein the object type is one of the following: a character type, an item type, a landscape type, or a scene type; and
    determining a cover image of the video based on the at least one first image and the object type of the principal object in each first image.

2.  The method according to claim 1, wherein the determining at least one first image in the plurality of key frames comprises:

    determining at least one second image in the plurality of key frames based on a principal object comprised in each key frame, wherein each second image comprises one principal object, and the second image is some or all images in the key frame;
    determining a correlation between the principal object in each second image and the video; and
    determining an image, in the at least one second image, that comprises a principal object whose correlation with the video is greater than or equal to the preset threshold as the at least one first image.

3.  The method according to claim 2, wherein the determining a correlation between the principal object in the second image and the video comprises:

    performing semantic analysis on the video, to obtain semantic information of the video;
    performing object recognition processing on the second image, to obtain an object name of the principal object in the second image; and
    determining the correlation between the principal object in the second image and the video based on a degree of matching between the semantic information and the object name.

4.  The method according to claim 2, wherein the determining a correlation between the principal object in the second image and the video comprises:

    obtaining object information of the principal object in the second image, wherein the object information comprises at least one of the following information: a quantity of occurrences of the principal object in the video and a picture percentage of the principal object in a video frame that comprises the principal object; and
    determining the correlation between the principal object in the second image and the video based on the object information of the principal object in the second image.

5.  The method according to any one of claims 1 to 4, wherein the determining a cover image of the video based on the at least one first image and the object type of the principal object in each first image comprises:

obtaining at least one piece of cover template information, wherein the cover template information is used to indicate a quantity of images comprised in a cover image, an object type of a principal object in the image, and an image layout manner;

determining at least one group of target images corresponding to each piece of cover template information in the at least one first image based on each piece of cover template information and the object type of the principal object in each first image; and

determining the cover image of the video based on each piece of cover template information and the at least one group of corresponding target images, wherein one cover image comprises a group of target images.

6. The method according to claim 5, wherein

the cover template information comprises at least one image identifier, an object type corresponding to each image identifier, and layout information corresponding to each image identifier, wherein the layout information comprises a shape, a size, and a position of an image corresponding to the image identifier; or

the cover template information comprises a cover template image and an object type corresponding to each image supplementation region in the cover template image, the cover template image comprises at least one image supplementation region, and an object type corresponding to the image supplementation region is an object type of a principal object in an image to be supplemented to the image supplementation region.

7. The method according to claim 5 or 6, wherein determining at least one group of target images corresponding to any one of the at least one piece of cover template information in the at least one first image based on the cover template information and the object type of the principal object in each first image comprises:

determining at least one target object type and a quantity of images corresponding to each target object type based on the cover template information; and

determining the at least one group of target images corresponding to the cover template information in the at least one first image based on the at least one target object type, the quantity of images corresponding to each target object type, and the object type of the principal object in each first image.

8. The method according to claim 7, wherein the determining the at least one group of target images corresponding to the cover template information in the at least one first image based on the at least one target object type, the quantity of images corresponding to each target object type, and the object type of the principal object in each first image comprises:

obtaining a group of first images corresponding to each target object type from the at least one first image, wherein an object type of a principal object in a group of first images corresponding to a target object type is the target object type;

sorting each group of first images in descending order of correlations between principal objects and the video; and

determining the at least one group of target images based on the quantity of images corresponding to each target object type and each group of sorted first images.

9. The method according to any one of claims 5 to 8, wherein determining the cover image of the video based on the any one of the at least one piece of cover template information and the at least one group of corresponding target images comprises:

laying out each group of target images based on layout information indicated in the cover template information, to obtain a cover image corresponding to each group of target images, wherein a cover image corresponding to a group of target images comprises the group of target images.

10. The method according to any one of claims 1 to 9, wherein the extracting a plurality of key frames from a video comprises:

extracting a plurality of to-be-selected frames from the video;

obtaining parameter information of each to-be-selected frame, wherein the parameter information comprises definition, picture brightness, and photographic aesthetics; and

determining the plurality of key frames in the plurality of to-be-selected frames based on the parameter information of each to-be-selected frame, wherein definition of each key frame is greater than or equal to preset definition, picture brightness of each key frame is between first brightness and second brightness, and composition of each key frame meets a preset aesthetic rule.

**11.** The method according to any one of claims 1 to 10, wherein the method further comprises:

obtaining object information of an object comprised in the cover image, wherein the object information comprises an object type and/or an object name of the object; and

determining label information of the cover image based on the object information.

**12.** The method according to claim 11, wherein when at least one cover image of the video is determined, the method further comprises:

receiving a video obtaining request corresponding to a first user, wherein the video obtaining request is used to request to obtain the video;

obtaining user information of the first user;

determining a target cover image in the plurality of determined cover images based on the user information; and

sending the video and the target cover image to a terminal device corresponding to the first user.

**13.** A cover image determining apparatus, wherein the cover image determining apparatus is configured to perform the method according to any one of claims 1 to 12.

**14.** A cover image determining apparatus, comprising a memory and a processor, wherein the processor executes program instructions in the memory, so that the apparatus implements the cover image determining method according to any one of claims 1 to 12.

**15.** A storage medium, wherein the storage medium is configured to store a computer program, and when the computer program is executed by a computer or a processor, the cover image determining method according to any one of claims 1 to 12 is implemented.

**16.** A computer program product, wherein the computer program product comprises instructions, and when the instructions are executed, a computer is enabled to perform the cover image determining method according to any one of claims 1 to 12.

**17.** A program product, wherein the program product comprises a computer program, the computer program is stored in a readable storage medium, at least one processor of a communications apparatus may read the computer program from the readable storage medium, and the at least one processor executes the computer program, so that the communications apparatus implements the cover image determining method according to any one of claims 1 to 12.

FIG. 1

Original image 1

Character 3

Character 1

Character 2

Principal object

Image 11

Image 12

Image 13

FIG. 2A

FIG. 2B

Original image 3

↓ Principal object

Image 31

FIG. 2C

3A

FIG. 3A

3B

FIG. 3B

|  | L1 | L2 |
|---|---|---|
| L3 |  |  |
| L4 |  |  |
|  |  |  |

FIG. 4

A1

A2

A3

A4

A5

A6

00:00:00

00:01:30

00:02:30

00:02:30

10:35
Video list library

Video 1

Video 2

10:30

NEWS

FIG. 5A

B1

B2

10:30

Moments of
a user A

Post a
video

User B
Hot pots in this restaurant
are good...

User C
It is a nice day. Let us go
for a walk

00:00:00

TO
FIG. 5B(b)

FIG. 5B(a)

EP 3 996 381 A1

CONT.
FROM
FIG. 5B(a)

TO
FIG. 5B(c)

B3

00:01:30

FIG. 5B(b)

B4

00:02:30

FIG. 5B(c)

B5

B6

Post

Add text
Nice landscape, fresh air

10:35

Moments of
the user B

Post a
video

User A
Nice landscape, fresh air

User C
It is a nice day. Let us
go for a walk

FIG. 5B(d)

C1

10:30

Short video app    User: 0001

Post a
video

TO
FIG. 5C(b)

FIG. 5C(a)

C2

10:31

Short video app    User: 0001

Camera

CONT.
FROM
FIG. 5C(a)

Choose from
Gallery

TO
FIG. 5C(c)

FIG. 5C(b)

C3

10:31

Local video library

Video 1

Video 2

CONT.
FROM
FIG. 5C(b)

Video 2

TO
FIG. 5C(d)

FIG. 5C(c)

CONT.
FROM
FIG. 5C(c)

Short video server

Process a cover image
Post a video

C4

10:30

Short video app    User: 0001

Video list

Video 1

Video 2

FIG. 5C(d)

S601

Obtain a video

S602

Extract at least one key frame from the to-be-processed video

S603

Determine a principal object in each key frame

S604

Determine at least one second image in the at least one key frame based on the principal object included in each key frame

S605

Determine a correlation between a principal object in each second image and the video

S606

Determine at least one first image in the at least one second image based on the correlation between the principal object in each second image and the video

S607

Obtain an object type of a principal object in each first image

S608

Obtain at least one piece of cover template information

S609

Determine at least one group of target images corresponding to each piece of cover template information in the at least one first image based on each piece of cover template information and the object type of the principal object in each first image

S610

Determine a cover image of the video based on each piece of cover template information and the at least one group of corresponding target images

FIG. 6

FIG. 7

FIG. 8

FIG. 9

Cover template image 1

Cover image 1

FIG. 10A

Cover image 2

Cover template image 2

Supplementation region 3 (character)

Supplementation region 2 (character)

Supplementation region 1 (character)

FIG. 10B

43

Cover template image 3

Supplementation region 1 (character)

Supplementation region 2 (character)

Cover image 3

FIG. 10C

Cover template image 3

Cover image 4

Supplementation region 1
(character)

Supplementation
region 2
(character)

GOT HBO

FIG. 10D

S1101

Extract at least one key frame from a video

S1102

Determine at least one first image in the at least one key frame, where a correlation between a principal object included in the first image and the video is greater than or equal to a preset threshold

S1103

Obtain an object type of a principal object in each first image, where the object type is one of the following: a character type, an item type, a landscape type, or a scene type

S1104

Determine a cover image of the video based on the at least one first image and the object type of the principal object in each first image

FIG. 11

**Terminal device 1**

Video uploaded by a user

Cover image 1

Cover image 2

...

Cover image N

Select by the user

**Server**

Video 1

Generate a plurality of cover images

Some cover images

Video 1

A plurality of cover images

Some cover images

**Terminal device 2**

Request the video 1

Video 1 + cover image 1

Cover image 1

**Terminal device 3**

Request the video 1

Video 1 + cover image 4

Cover image 4

FIG. 12

1301

Short video app    User: 0001

Post a video

TO
FIG. 13B

FIG. 13A

1302

CONT.
FROM
FIG. 13A

10:31

Short video app      User: 0001

Camera

Choose from
Gallery

FIG. 13B

1303

10:31

Local video library

Video 1

Video 2

FIG. 13C

CONT.
FROM
FIG. 13C

Video 1

A plurality of
cover images

TO
FIG. 13E

Cover image
selected by the user

Short video server

Video 1
(cover image 4)

Request the
video 1

Video 1
(cover image 1)

Request the
video 1

TO
FIG. 13F

TO
FIG. 13F

FIG. 13D

1304

Short video app          User: 0001

Cover image 1          Cover image 2

Cover image 3          Cover image 4

Cover image 5          Cover image 6

OK

CONT.
FROM
FIG. 13D

FIG. 13E

CONT.
FROM
FIG. 13D

CONT.
FROM
FIG. 13D

1305

1306

10:35

Short video app    User: 0002

Video 1

10:36

Short video app    User: 0003

Video 1

FIG. 13F

Cover image determining apparatus 10

Processor — 12

13 — Memory — 11

FIG. 14

Terminal device 20

Communications module 24

Display 26

Processor 21

External memory interface 23

Camera 25

Internal memory 22

Audio/Video module 27

FIG. 15

<div align="center">INTERNATIONAL SEARCH REPORT</div>

| | International application No. |
|---|---|
| | **PCT/CN2020/108345** |

**A. CLASSIFICATION OF SUBJECT MATTER**

H04N 21/44(2011.01)i; H04N 21/466(2011.01)n; H04N 21/475(2011.01)n; H04N 21/485(2011.01)n

According to International Patent Classification (IPC) or to both national classification and IPC

**B. FIELDS SEARCHED**

Minimum documentation searched (classification system followed by classification symbols)

H04N, G06F

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT: 视频, 封面, 海报, 缩略, 对象, 主体, 类型, 种类, 分类, 类别, video, cover, poster, thumbnail, object, type, category, classify

**C. DOCUMENTS CONSIDERED TO BE RELEVANT**

| Category* | Citation of document, with indication, where appropriate, of the relevant passages | Relevant to claim No. |
|---|---|---|
| PX | CN 110602554 A (HUAWEI TECHNOLOGIES CO., LTD.) 20 December 2019 (2019-12-20) claims 1-17 | 1-17 |
| Y | CN 104244024 A (BEIJING KINGSOFT SECURITY SOFTWARE CO., LTD.) 24 December 2014 (2014-12-24) description paragraphs [0100]-[0129], paragraphs [0169]-[0231], figures 2, 4-7 | 1-17 |
| Y | CN 108833939 A (BEIJING YOUKU TECH CO., LTD.) 16 November 2018 (2018-11-16) description, paragraphs [0088]-[0153], and figures 1-6 | 1-17 |
| A | CN 109905782 A (LENOVO (BEIJING) LTD.) 18 June 2019 (2019-06-18) entire document | 1-17 |
| A | CN 107147939 A (BAIDU ONLINE NETWORK TECHNOLOGY (BEIJING) CO., LTD.) 08 September 2017 (2017-09-08) entire document | 1-17 |
| A | CN 109996091 A (SUZHOU BACHASHU INTELLIGENT TECHNOLOGY CO., LTD.) 09 July 2019 (2019-07-09) entire document | 1-17 |

☑ Further documents are listed in the continuation of Box C.     ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **30 September 2020** | **30 October 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/108345**

### C.    DOCUMENTS CONSIDERED TO BE RELEVANT

| Category* | Citation of document, with indication, where appropriate, of the relevant passages | Relevant to claim No. |
|---|---|---|
| A | JP 2004173280 A (HEWLETT-PACKARD DEVELOPMENT COMPANY, L.P.) 17 June 2004 (2004-06-17)<br>        entire document | 1-17 |

Form PCT/ISA/210 (second sheet) (January 2015)

INTERNATIONAL SEARCH REPORT
Information on patent family members

International application No.

**PCT/CN2020/108345**

| Patent document cited in search report | | | Publication date (day/month/year) | Patent family member(s) | | | Publication date (day/month/year) |
|---|---|---|---|---|---|---|---|
| CN | 110602554 | A | 20 December 2019 | None | | | |
| CN | 104244024 | A | 24 December 2014 | CN | 104244024 | B | 08 May 2018 |
| CN | 108833939 | A | 16 November 2018 | None | | | |
| CN | 109905782 | A | 18 June 2019 | None | | | |
| CN | 107147939 | A | 08 September 2017 | None | | | |
| CN | 109996091 | A | 09 July 2019 | None | | | |
| JP | 2004173280 | A | 17 June 2004 | US | 2004095396 | A1 | 20 May 2004 |
| | | | | KR | 20040044373 | A | 28 May 2004 |
| | | | | US | 7194701 | B2 | 20 March 2007 |

Form PCT/ISA/210 (patent family annex) (January 2015)

**EP 3 996 381 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910758415